# EUROPEAN PATENT SPECIFICATION

(11) **EP 2 492 544 B1**
(45) Date of publication and mention of the grant of the patent: **12.12.2018**
(21) Application number: 12156929.7
(22) Date of filing: 24.02.2012
(51) Int. Cl.: B60K 6/365, B60K 6/48, F16H 3/72

(54) **Electric machine having controllable planetary gear set**
Elektrische Maschine mit Doppelantrieb mit steuerbarem Umlaufrädergetriebesatz
Machine électrique double commande dotée d'un ensemble à engrenages planétaire contrôlable

(30) Priority: 24.02.2011 US 201113033772; 24.02.2011 US 201113033849; 24.02.2011 US 201113033855
(43) Date of publication of application: 29.08.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- CN-A- 101 451 597
- CN-A- 101 480 913
- CN-Y- 201 423 916
- DE-A1-102005 008 148
- GB-A- 2 314 128
- GB-A- 2 466 967
- JP-A- 9 175 199

## Description

### BACKGROUND OF THE INVENTION

### (a) Field of the Invention

The present invention relates to an electric machine being combined with an planetary gear set (DG101) and a controllable brake device, and through controlling the controllable brake device to perform brake locking or releasing, the operations of transmission function of connecting transmission or releasing between a rotation shaft (S101) at an output/input end, a rotation shaft (SI02) at an output/input end and a sleeve type rotation shaft (AS101) at an output/input end of the planetary gear set (DG101) are enabled to be controlled, thereby to control the interactive operations between the dual-drive electric machine (EM100) and the output/input ends.

### (b) Description of the Prior Art

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation.

CN 201,423,916 Y is directed towards a driving devices used for a parallel hybrid electric vehicle comprising an electric motor, a motor controller, a planetary mechanism, a storage battery pack, an electronic control unit and a fixed-axis gear pair.

### SUMMARY OF THE INVENTION

The present invention provides an electric machine in accordance with claim 1.

In this way, a conventional friction clutch can be replaced by the controllable brake device of the present invention.

In some embodiments of the invention, more than one brake device is included in the electric machine. The brake device or devices may be located in a number of positions within the electric machine. The controllable brake device performs brake locking and releasing operations.

### BRIEF DESCRIPTION OF THE DRAWINGS

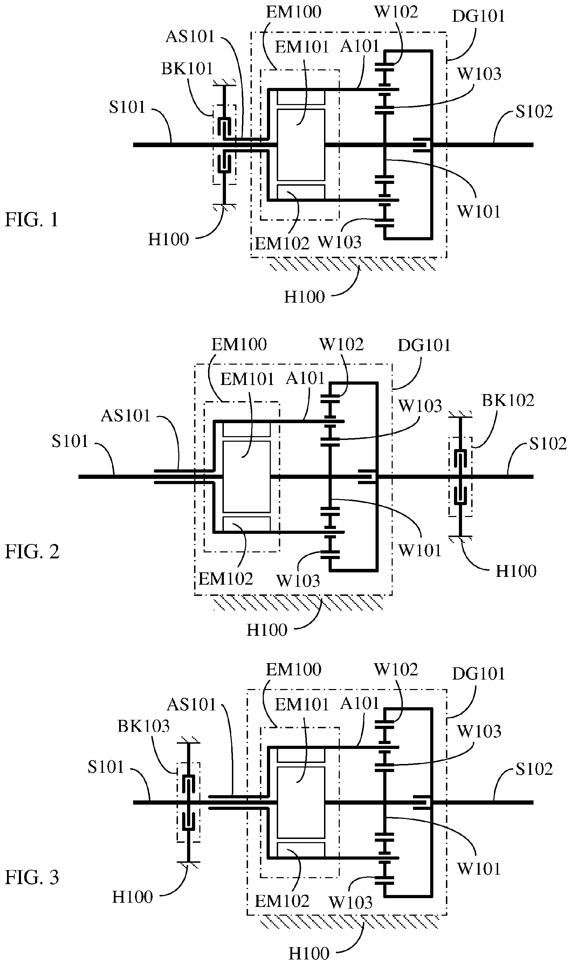

The invention is shown in Figures 1, 4, 6, 7, 8, 11, 13, 14, 15, 18, 20 and 21. FIG. 1 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (HI00), the planetary gear set (DG101) also being fixed in the housing (H100), and the outer annular wheel (W102) of the planetary gear set (DG101) being provided for driving the rotation shaft (S102) to be served as an output/input end, according to one embodiment of the present invention.
FIG. 2 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) sleeved on the rotation shaft (S101) being served as an output/input end, the outer annular wheel (W102) of the planetary gear set (DG101) being provided for driving the rotation shaft (S102) to be served as an output/input end, and the rotation shaft (S102) being connected to an action side of the controllable brake device (BK102) while the other action side of the controllable brake device (BK102) being fixed in the housing (H100), according to one embodiment of the present invention.
FIG. 3 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and provided for connecting with an action side of the controllable brake device (BK103) while the other action side of the controllable brake device (BK103) being fixed in the housing (H100), the planetary gear set (DG101) also being fixed in the housing (H100), the planetary wheel (W103) of the planetary gear set (DG101) being provided for linking the rocker arm (A101) and combined with the outer rotation part of electric machine (EM102) and the sleeve type rotation shaft (AS101), the sleeve type rotation shaft (AS101) being served as an output/input end, and the outer annular wheel (W102) of the planetary gear set (DG101) being provided for driving the rotation shaft (S102) to be served as an output/input end, according to one embodiment of the present invention.

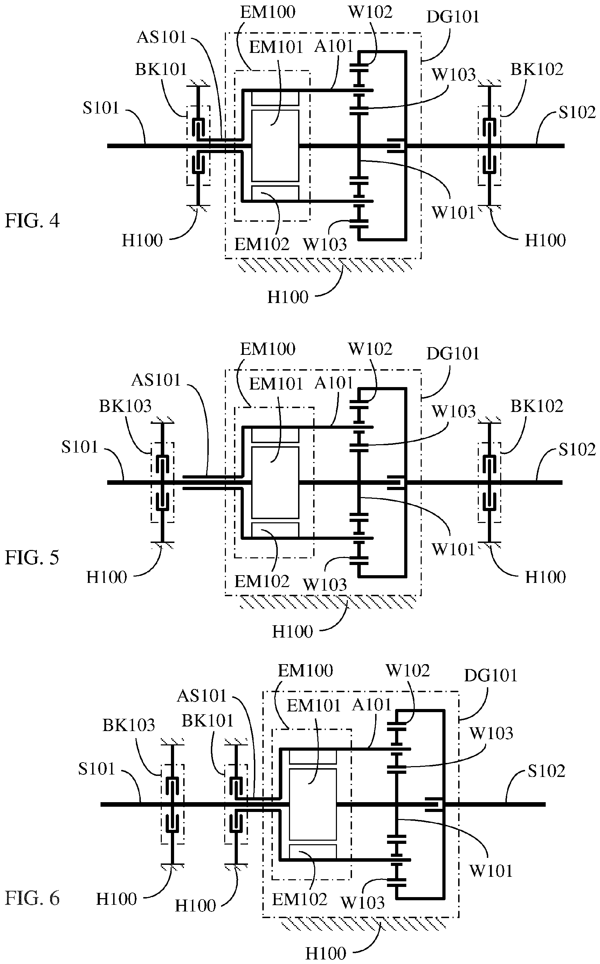

FIG. 4 is a schematic structural view showing the controllable brake device (BK102) being further installed between the rotation shaft (SI02) and the housing (H100) as shown in FIG. 1.
FIG. 5 is a schematic structural view showing the controllable brake device (BK103) being further installed between the rotation shaft (S101) and the housing (H100) as shown in FIG. 2.
FIG. 6 is a schematic structural view showing the controllable brake device (BK101) being further installed between the sleeve type rotation shaft (AS101) and the housing (HI00) as shown in FIG. 3.

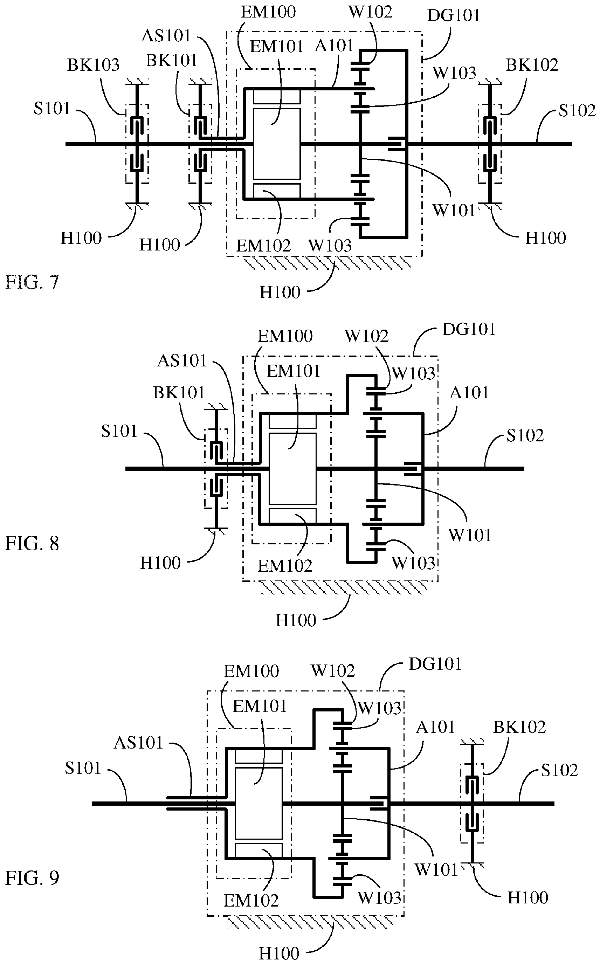

FIG. 7 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and provided for connecting to an action side of the controllable brake device (BK103) while the other action side of the controllable brake device (BK103) being fixed in the housing (H100), the planetary wheel (W103) of the planetary gear set (DG101) is provided for linking the rocker arm (A101) and combined with the outer rotation part of electric machine (EM102) and combined with the sleeve type rotation shaft (AS101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the planetary gear set (DG101) also being fixed in the housing (H100), and the outer annular wheel (W102) of the planetary gear set (DG101) being provided for driving the rotation shaft (S102) to be served as an output/input end, and the rotation shaft (S102) being connected to an action side of the controllable brake device (BK102) while and the other action side of the controllable brake device (BK102) being fixed in the housing (H100), according to one embodiment of the present invention.
FIG. 8 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the outer annular wheel (W102) being combined with the outer rotation part of electric machine (EM102) and combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the planetary gear set (DG101) also being fixed in the housing (H100), and the rocker arm (A101) linked by the planetary wheel (W103) of the planetary gear set (DG101) being provided for driving the rotation shaft (S102) to be served as an output/input end, according to one embodiment of the present invention.
FIG. 9 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input end, the rocker arm (A101) linked by the planetary wheel (W103) of the planetary gear set (DG101) being provided for driving the rotation shaft (S102) to be served as an output/input end, and the rotation shaft (SI02) or the rocker arm (A101) being connected to an action side of the controllable brake device (BK102) while the other action side of the controllable brake device (BK102) being fixed in the housing (H100), according to one embodiment of the present invention.

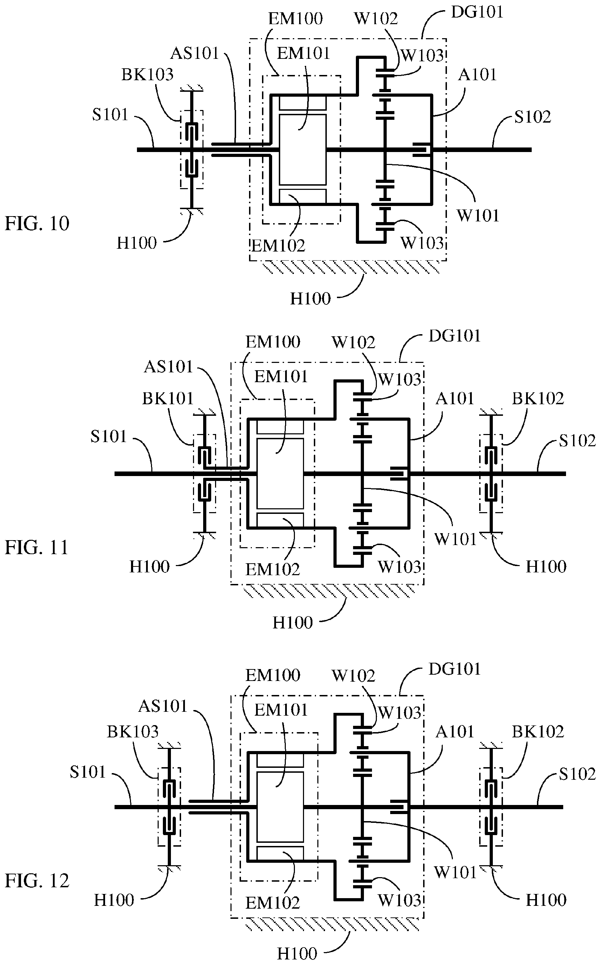

FIG. 10 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and provided for connecting to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and the sleeve type rotation shaft (AS101), the sleeve type rotation shaft (AS101) being served as an output/input end, and the planetary wheel (W103) of the planetary gear set (DG101) being provided for linking the rocker arm (A101) and driving the rotation shaft (SI02) to be served as an output/input end, according to one embodiment of the present invention.
FIG. 11 is a schematic structural view showing the controllable brake device (BK102) being further installed between the rotation shaft (SI02) and the housing (H100) as shown in FIG. 8.
FIG. 12 is a schematic structural view showing the controllable brake device (BK103) being further installed between the rotation shaft (S101) and the housing (H100) as shown in FIG. 9.

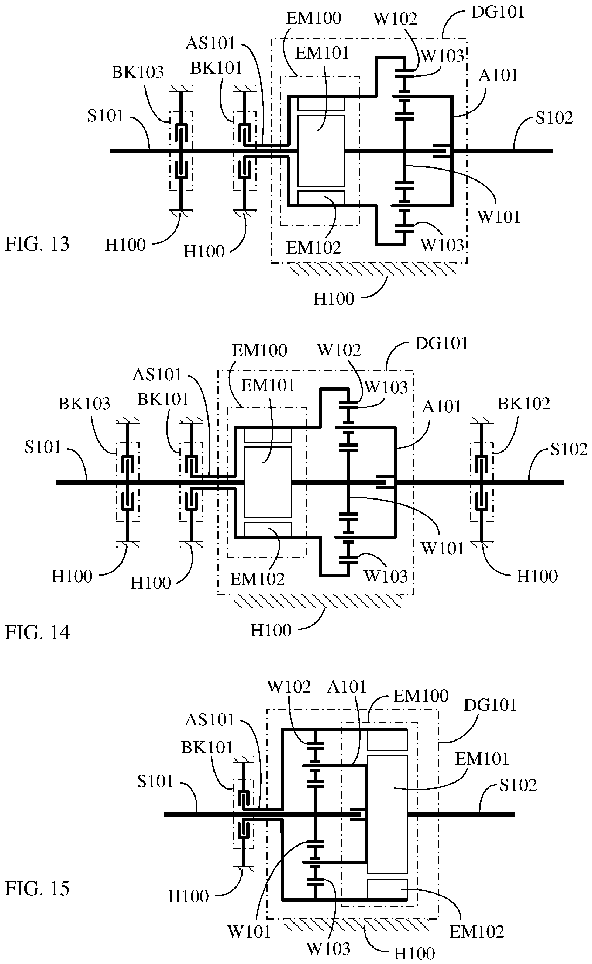

FIG. 13 is a schematic structural view showing the controllable brake device (BK101) being further installed between the sleeve type rotation shaft (AS101) and the housing (HI00) as shown in FIG. 10.
FIG. 14 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and being provided for connecting to an action side of the controllable brake device (BK103) while the other action side of the controllable brake device (BK103) being fixed in the housing (H100), the outer annular wheel (W102) of the planetary gear set (DG101) being combined with the outer rotation part of electric machine (EM102) and combined to the sleeve type rotation shaft (AS101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the planetary gear set (DG101) also being fixed in the housing (H100), and the planetary wheel (W103) of the planetary gear set (DG101) being provided for linking the rocker arm (A101) and driving the rotation shaft (SI02) to be served as an output/input end, and the rotation shaft (S102) or the rocker arm (A101) being connected to an action side of the controllable brake device (BK102) while the other action side of the controllable brake device (BK102) being fixed in the housing (H100), according to one embodiment of the present invention.
FIG. 15 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the outer annular wheel (W102) being combined with the outer rotation part of electric machine (EM102) and combined with the sleeve type rotation shaft (AS101), the sleeve type rotation shaft (AS101) rotated and sleeved on the rotation shaft (S101) being served as an output/input shaft and being provided for connecting to an action side of the controllable brake device (BK101) while the other action side of the controllable brake device (BK101) being fixed in the housing (H100), and the planetary gear set (DG101) also being fixed in the housing (H100), according to one embodiment of the present invention..

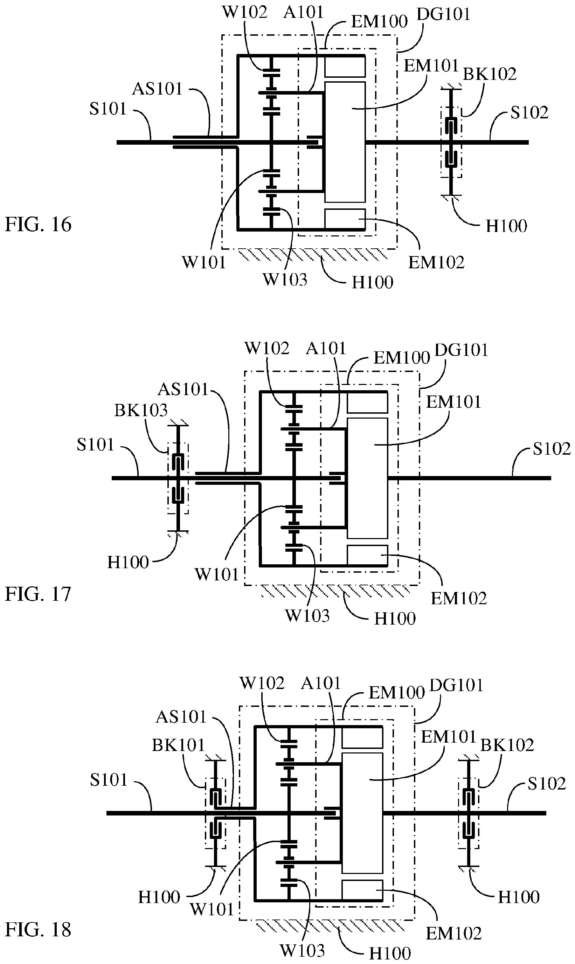

FIG. 16 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input shaft, and the rotation shaft (S102) being connected to an action side of the controllable brake device (BK102) while the other action side of the controllable brake device (BK102) being fixed in the housing (H100), according to one embodiment of the present invention.
FIG. 17 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the rotation shaft (S101) being connected to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and combined with the sleeve type rotation shaft (AS101), and the sleeve type rotation shaft (AS101) being served as an output/input end, according to one embodiment of the present invention.
FIG. 18 is a schematic structural view showing the controllable brake device (BK102) being further installed between the rotation shaft (SI02) and the housing (H100) as shown in FIG. 15.

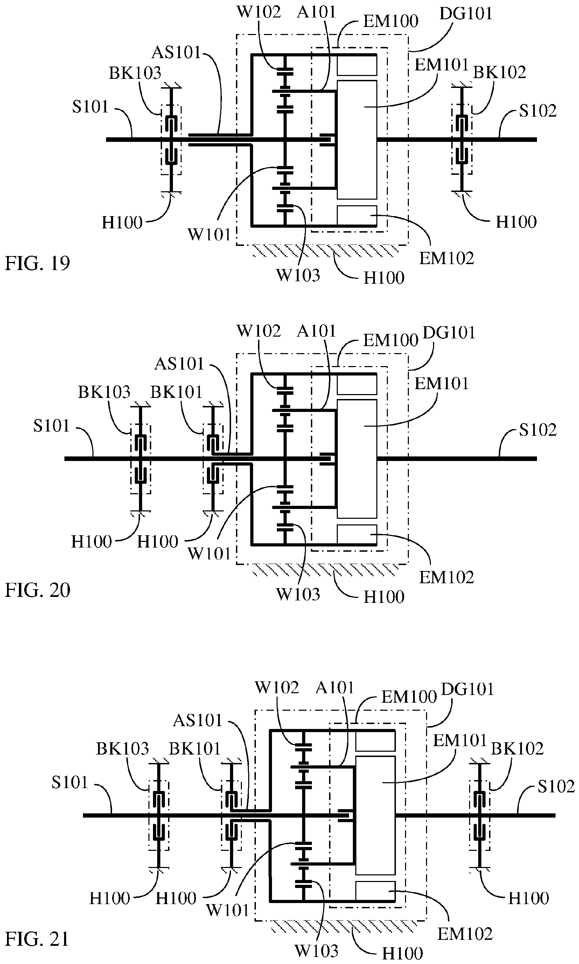

FIG. 19 is a schematic structural view showing the controllable brake device (BK103) being further installed between the rotation shaft (S101) and the housing (H100) as shown in FIG. 16.
FIG. 20 is a schematic structural view showing the controllable brake device (BK101) being further installed between the sleeve type rotation shaft (AS101) and the housing (HI00) as shown in FIG. 17.
FIG. 21 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, and the sun wheel (W101) being combined on the rotation shaft (S101) for being served as an output/input end, the rotation shaft (S101) being connected to an action side of the controllable brake device (BK103) while the other action side of the controllable brake device (BK103) being fixed in the housing (H100), the outer annular wheel (W102) of the planetary gear set (DG101) being combined with the outer rotation part of electric machine (EM102) and combined to the sleeve type rotation shaft (AS 101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the planetary gear set (DG101) also being fixed in the housing (H100), and the rotation shat (S102) being connected to an action side of the controllable brake device (BK102) while the other action side of the controllable brake device (BK102) being fixed in the housing (H100), according to one embodiment of the present invention.

### DESCRIPTION OF MAIN COMPONENT SYMBOLS

A101 : Rocker arm
AS101 : Sleeve type rotation shaft
BK101, BK102, BK103 : Controllable brake device
DG101 : Planetary gear set
EM100 : Dual-drive electric machine
EM101 : Inner rotation part of electric machine
EM102 : Outer rotation part of electric machine
H100 : Housing
S101, S102 : Rotation shaft
W101 : Sun wheel
W102 : Outer annular wheel
W103 : Planetary wheel

### DETAILED DESCRIPTION OF THE PREFERRED EMBODIMENTS

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation.

The present invention provides a dual-drive electric machine having a controllable planetary gear set, in which an inner rotation part of the electric machine (EM101) of the dual-drive electric machine (EM100) being combined with a sun wheel (W101) of an planetary gear set (DG101) and combined with a rotation shaft (S101) shared by the above two is served as an output/input end, a rotation shaft (S102) combined with an outer annular wheel (W102) is served as an output/input end, and a rocker arm (A101) linked by an planetary wheel (W103) of the planetary gear set (DG101) combined with an outer rotation part of electric machine (EM102) and combined with a sleeve type rotation shaft (AS101) is served as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (S102) at the output/input end and the sleeve type rotation shaft (AS101) at the output/input end of the planetary gear set (DG101) are enabled to be controlled, and the interactive operations between the dual-drive electric machine (EM100) and the output/input ends are also enabled to be controlled.

The structures and embodiments of the dual-drive electric machine having controllable planetary gear set of the present invention are disclosed as followings:
FIG. 1 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS 101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the planetary gear set (DG101) also being fixed in the housing (H100), and the outer annular wheel (W102) of the planetary gear set (DG101) being provided for driving the rotation shaft (S102) to be served as an output/input end, according to one embodiment of the present invention.

As show in FIG 1, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (H100), and the outer annular wheel (W102) of the planetary gear set (DG101) is provided for driving the rotation shaft (SI02) to be served as an output/input end, and the rotation shaft (SI01) connected with the sun wheel (W101) is also served as an output/input end;
   According to the embodiment shown in FIG. 1, the operations include one or more than one of following functions:
   --When the controllable brake device (BK101) is controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
   -- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
   --When the controllable brake device (BK101) is controlled to be in the brake locking state, and the dual-drive electric machine (EM100) is not operated as the electric machinery function, the transmission relation between the rotation shaft (S101) and the rotation shaft (S102) is in a connecting relation allowing for transmission;
   --When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);
      The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 2 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) sleeved on the rotation shaft (S101) being served as an output/input end, the outer annular wheel (W102) of the planetary gear set (DG101) being provided for driving the rotation shaft (S102) to be served as an output/input end, and the rotation shaft (S102) being connected to an action side of the controllable brake device (BK102) while the other action side of the controllable brake device (BK102) being fixed in the housing (H100), according to one embodiment of the present invention.

As show in FIG 2, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end; --The outer annular wheel (W102) of the planetary gear set (DG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100);
   According to the embodiment shown in FIG. 2, the operations include one or more than one of following functions:
   --When the controllable brake device (BK102) is controlled to be in the releasing state, and the dual-drive electric machine (EM100) is not operated as the electric machinery function, the transmission relations between the rotation shaft (S101) and the sleeve type rotation shaft (AS101) and the rotation shaft (S102) are in the releasing state allowing idle rotation;
   -- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
   --When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
   --When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);
      The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 3 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and provided for connecting with an action side of the controllable brake device (BK103) while the other action side of the controllable brake device (BK103) being fixed in the housing (H100), the planetary gear set (DG101) also being fixed in the housing (H100), the planetary wheel (W103) of the planetary gear set (DG101) being provided for linking the rocker arm (A101) and combined with the outer rotation part of electric machine (EM102) and the sleeve type rotation shaft (AS101), the sleeve type rotation shaft (AS101) being served as an output/input end, and the outer annular wheel (W102) of the planetary gear set (DG101) being provided for driving the rotation shaft (S102) to be served as an output/input end, according to one embodiment of the present invention.

As show in FIG 3, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end for connecting to an action side of the controllable brake device (BK103) while the other action side of the controllable brake device (BK103) is fixed in the housing (H100);
--The planetary wheel (W103) of the planetary gear set (DG101) is provided for linking the rocker arm (A101) and combined with the outer rotation part of electric machine (EM102) and combined with the sleeve type rotation shaft (AS101), the sleeve type rotation shaft (AS101) rotated and sleeved on the rotation shaft (S101) is served as an output/input end, the outer annular wheel (W102) of the planetary gear set (DG101) is provided for driving the rotation shaft (S102) to be served as an output/input end, and the rotation shaft (S101) connected to the sun wheel (W101) is also served as an output/input end;

According to the embodiment shown in FIG. 3, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);

--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 4 is a schematic structural view showing the controllable brake device (BK102) being further installed between the rotation shaft (SI02) and the housing (H100) as shown in FIG. 1.

As shown in FIG. 4, the rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the planetary gear set (DG101) is also fixed in the housing (H100), the outer annular wheel (W102) of the planetary gear set (DG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100), which mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) of the planetary gear set (DG101) combined with the rotation shaft (S102) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (HI00), the outer annular wheel (W102) of the planetary gear set (DG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);
   According to the embodiment shown in FIG. 4, the operations include one or more than one of following functions:
   --When the controllable brake device (BK101) and the controllable brake device (BK102) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
   -- When the controllable brake device (BK101) and the controllable brake device (BK102) are both controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
   --When the controllable brake device (BK101) is controlled to be in the brake locking state and the controllable brake device (BK102) is controlled to be in the releasing state, and the dual-drive electric machine (EM100) is not operated as the electric machinery function, the transmission relation between the rotation shaft (S101) and the rotation shaft (SI02) is in a connecting relation allowing for transmission;
   --When the controllable brake device (BK101) is controlled to be in the brake locking state and the controllable brake device (BK102) is controlled to be in the releasing state, and the dual-drive electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
   --When the controllable brake device (BK101) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
   --When the controllable brake device (BK101) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
   --When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
      The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 5 is a schematic structural view showing the controllable brake device (BK103) being further installed between the rotation shaft (S101) and the housing (H100) as shown in FIG. 2.

As shown in FIG. 5, the rotation shaft (S101) shared by the sun wheel (W101) of the planetary gear set (DG101) and the inner rotation part of electric machine (EM101) of the dual-drive electric machine (EM100) is served as an output/input end and provided for connecting to an action side of the controllable brake device (BK103) while the other action side of the controllable brake device (BK103) is fixed in the housing (H100), the planetary gear set (DG101) is also fixed in the housing (H100), the planetary wheel (W103) of the planetary gear set (DG101) is provided for linking the rocker arm (A101) and combined with the outer rotation part of electric machine (EM102) and combined with the sleeve type rotation shaft (AS 101), and the sleeve type rotation shaft (AS101) rotated and sleeved on the rotation shaft (S101) is served as an output/input end, the outer annular wheel (W102) of the planetary gear set (DG101) is provided for driving the rotation shaft (S102) to be served as an output/input end, and the rotation shaft (SI02) is connected to an action side of the controllable brake device (BK102) while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
-- The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100); the outer annular wheel (W102) of the planetary gear set (DG101) is combined with the rotation shaft (S102) for being served as an output/input end, and is provided for connecting to an action side of the controllable brake device (BK102) while the other action side of the controllable brake device (BK102) is fixed in the housing (H100), the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
   According to the embodiment shown in FIG. 5, the operations include one or more than one of following functions:
   --When the controllable brake device (BK102) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
   -- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
   --When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
   --When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
   --When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
   --When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
   --When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
      The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 6 is a schematic structural view showing the controllable brake device (BK101) being further installed between the sleeve type rotation shaft (AS101) and the housing (HI00) as shown in FIG. 3.

As shown in FIG. 6, the rotation shaft (S101) shared by the sun wheel (W101) of the planetary gear set (DG101) and the inner rotation part of electric machine (EM101) of the dual-drive electric machine (EM100) is served as an output/input end and provided for connecting to an action side of the controllable brake device (BK103) while the other action side of the controllable brake device (BK103) is fixed in the housing (H100), the planetary wheel (W103) of the planetary gear set (DG101) is provided for linking the rocker arm (A101) and combined with the outer rotation part of electric machine (EM102) and combined with the sleeve type rotation shaft (AS101), the sleeve type rotation shaft (AS101) is rotated and combined on the rotation shaft (S101) for being served as an output/input end, the sleeve type rotation shaft (AS101) is connected to an action side of the controllable brake device (BK101) while the other action side of the controllable brake device (BK101) is fixed in the housing (H100), the planetary gear set (DG101) is also fixed in the housing (H100), and the outer annular wheel (W102) of the planetary gear set (DG101) is provided for driving the rotation shaft (S102) to be served as an output/input end, which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The planetary wheel (W103) of the planetary gear set (DG101) is provided for linking the rocker arm (A101) and combined with the outer rotation part of electric machine (EM102) and combined with the sleeve type rotation shaft (AS101), and the sleeve type rotation shaft (AS 101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (H100), and the outer annular wheel (W102) of the planetary gear set (DG101) is provided for driving the rotation shaft (S102) to be served as an output/input end;
   According to the embodiment shown in FIG. 6, the operations include one or more than one of following functions:
   --When the controllable brake device (BK101) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
   -- When the controllable brake device (BK101) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
   --When the controllable brake device (BK101) is controlled to be in the brake locking state and the controllable brake device (BK103) is controlled to be in the releasing state, and the dual-drive electric machine (EM100) is not operated as the electric machinery function, the transmission relation between the rotation shaft (S101) and the rotation shaft (SI02) is in a connecting relation allowing for transmission;
   --When the controllable brake device (BK101) is controlled to be in the brake locking state and the controllable brake device (BK103) is controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
   --When the controllable brake device (BK101) is controlled to be in the releasing state and the controllable brake device (BK103) is controlled to be in the brake locking state, and the dual-drive electric machine (EM100) is not operated as the electric machinery function, the transmission relation between the rotation shaft (SI02) and the sleeve type rotation shaft (AS101) is in a connecting relation allowing for transmission;
   --When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
   --When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state.
      The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 7 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and provided for connecting to an action side of the controllable brake device (BK103) while the other action side of the controllable brake device (BK103) being fixed in the housing (H100), the planetary wheel (W103) of the planetary gear set (DG101) is provided for linking the rocker arm (A101) and combined with the outer rotation part of electric machine (EM102) and combined with the sleeve type rotation shaft (AS 101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the planetary gear set (DG101) also being fixed in the housing (H100), and the outer annular wheel (W102) of the planetary gear set (DG101) being provided for driving the rotation shaft (S102) to be served as an output/input end, and the rotation shaft (S102) being connected to an action side of the controllable brake device (BK102) while and the other action side of the controllable brake device (BK102) being fixed in the housing (H100), according to one embodiment of the present invention.

As shown in FIG. 7, the rotation shaft (S101) shared by the sun wheel (W101) of the planetary gear set (DG101) and the inner rotation part of electric machine (EM101) of the dual-drive electric machine (EM100) is served as an output/input end and provided for connecting to an action side of the controllable brake device (BK103) while the other action side of the controllable brake device (BK103) is fixed in the housing (H100), the planetary wheel (W103) of the planetary gear set (DG101) is provided for linking the rocker arm (A101) and combined with the outer rotation part of electric machine (EM102) and combined with the sleeve type rotation shaft (AS101), the sleeve type rotation shaft (AS101) is rotated and sleeved on the rotation shaft (S101) for being served as an output/input end, the sleeve type rotation shaft (AS101) is connected to an action side of the controllable brake device (BK101) while the other action side of the controllable brake device (BK101) is fixed in the housing (H100), the planetary gear set (DG101) is also fixed in the housing (H100), the outer annular wheel (W102) of the planetary gear set (DG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The planetary wheel (W103) of the planetary gear set (DG101) is provided for linking the rocker arm (A101) and combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the outer annular wheel (W102) of the planetary gear set (DG101) is provided for driving the rotation shaft (SI02) to be served as an output/input end, and the rotation shaft (SI02) is connected to an action side of the controllable brake device (BK102) while the other action side of the controllable brake device (BK102) is fixed in the housing (H100);
   According to the embodiment shown in FIG. 7, the operations include one or more than one of following functions:
   --When the controllable brake device (BK101) and the controllable brake device (BK102) and the controllable brake device (BK103) are all controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
   -- When the controllable brake device (BK101) and the controllable brake device (BK102) and the controllable brake device (BK103) are all controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
   --When the controllable brake device (BK101) is controlled to be in the brake locking state, the controllable brake device (BK102) and the controllable brake device (BK103) are controlled to be in the releasing state, and the dual-drive electric machine (EM100) is not operated as the electric machinery function, the transmission relation between the rotation shaft (S101) and the rotation shaft (SI02) is in a connecting relation allowing for transmission;
   --When the controllable brake device (BK101) is controlled to be in the brake locking state, the controllable brake device (BK102) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
   --When the controllable brake device (BK102) is controlled to be in the brake locking state, the controllable brake device (BK101) and the controllable brake device (BK103) are controlled to be in the releasing state, and the dual-drive electric machine (EM100) is not operated as the electric machinery function, the transmission relation between the rotation shaft (S101) and the sleeve type rotation shaft (AS101) is in a connecting relation allowing for transmission;
   --When the controllable brake device (BK102) is controlled to be in the brake locking state, the controllable brake device (BK101) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
   --When the controllable brake device (BK103) is controlled to be in the brake locking state, the controllable brake device (BK101) and the controllable brake device (BK102) are controlled to be in the releasing state, and the dual-drive electric machine (EM100) is not operated as the electric machinery function, the transmission relation between the rotation shaft (SI02) and the sleeve type rotation shaft (AS101) is in a connecting relation allowing for transmission;
   --When the controllable brake device (BK103) is controlled to be in the brake locking state, the controllable brake device (BK101) and the controllable brake device (BK102) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
   --When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
      The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

The dual-drive electric machine having a controllable planetary gear set of the present invention, in which an inner rotation part of the electric machine (EM101) of the dual-drive electric machine (EM100) being combined with a sun wheel (W101) of an planetary gear set (DG101) and combined with a rotation shaft (S101) shared by the above two is served as an output/input end, a rotation shaft (SI02) connected with a rocker arm (A101) linked by a planetary wheel (W103) is further served as an output/input end, and an outer annular wheel (W102) of the planetary gear set (DG101) combined with an outer rotation part of electric machine (EM102) and a sleeve type rotation shaft (AS101) is served as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (S102) at the output/input end and the sleeve type rotation shaft (AS101) at the output/input end of the planetary gear set (DG101) are enabled to be controlled, and the interactive operations between the dual-drive electric machine (EM100) and the output/input ends are also enabled to be controlled.

FIG. 8 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the outer annular wheel (W102) being combined with the outer rotation part of electric machine (EM102) and combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the planetary gear set (DG101) also being fixed in the housing (H100), and the rocker arm (A101) linked by the planetary wheel (W103) of the planetary gear set (DG101) being provided for driving the rotation shaft (S102) to be served as an output/input end, according to one embodiment of the present invention.

As show in FIG 8, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S 101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) is combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the rocker arm (A101) linked by the planetary wheel (W103) of the planetary gear set (DG101) is provided for driving the rotation shaft (S102) to be served as an output/input end, and the rotation shaft (S101) combined with the sun wheel (W101) is also served as an output/input end.

According to the embodiment shown in FIG. 1, the operations include one or more than one of following functions:
--When the controllable brake device (BK101) is controlled to be in the releasing state, and the dual-drive electric machine (EM100) is not operated as the electric machinery function, the transmission relations between the rotation shaft (S101) and the rotation shaft (S102) and the sleeve type rotation shaft (AS 101) are in the releasing state allowing idle rotation;
-- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S 101), the rotation shaft (S102) and the sleeve type rotation shaft (AS101);
--When the controllable brake device (BK101) is controlled to be in the brake locking state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 9 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input end, the rocker arm (A101) linked by the planetary wheel (W103) of the planetary gear set (DG101) being provided for driving the rotation shaft (S102) to be served as an output/input end, and the rotation shaft (SI02) or the rocker arm (A101) being connected to an action side of the controllable brake device (BK102) while the other action side of the controllable brake device (BK102) being fixed in the housing (H100), according to one embodiment of the present invention.

As show in FIG 9, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (SI02) or rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S 101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) is combined with the outer rotation part of electric machine (EM102) and combined with the sleeve type rotation shaft (AS 101), and the sleeve type rotation shaft (AS101) rotated and sleeved on the rotation shaft (S101) is served as an output/input end;
--The rocker arm (A101) linked by the planetary wheel (W103) of the planetary gear set (DG101) is provided for driving the rotation shaft (S102) to be served as an output/input end, and the rotation shaft (SI02) or the rocker arm (A101) is connected to an action side of the controllable brake device (BK102) while the other action side of the controllable brake device (BK102) is fixed in the housing (H100).

According to the embodiment shown in FIG. 9, the operations include one or more than one of following functions:
--When the controllable brake device (BK102) is controlled to be in the releasing state, and the dual-drive electric machine (EM100) is not operated as the electric machinery function, the transmission relations between the rotation shaft (S101) and the sleeve type rotation shaft (AS 101) and the rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 10 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and provided for connecting to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and the sleeve type rotation shaft (AS101), the sleeve type rotation shaft (AS101) being served as an output/input end, and the planetary wheel (W103) of the planetary gear set (DG101) being provided for linking the rocker arm (A101) and driving the rotation shaft (SI02) to be served as an output/input end, according to one embodiment of the present invention.

As show in FIG 10, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
-- Rocker arm (A101): having one end provided for allowing the planetary wheel (W103) to rotate and link, and the other end being connected to the rotation shaft (S102);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S 101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The outer annular wheel (W102) of the planetary gear set (DG101) combined with the outer rotation part of electric machine (EM102) and combined with the sleeve type rotation shaft (AS101), the sleeve type rotation shaft (AS101) rotated and sleeved on the rotation shaft (S101) is served as an output/input end, the planetary wheel (W103) of the planetary gear set (DG101) is provided for linking the rocker arm (A101) and driving the rotation shaft (SI02) to be served as an output/input end, and the rotation shaft (S101) combined with the sun wheel (W101) is also served as an output/input end.

According to the embodiment shown in FIG. 10, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS 101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 11 is a schematic structural view showing the controllable brake device (BK102) being further installed between the rotation shaft (SI02) and the housing (H100) as shown in FIG. 8.

As shown in FIG. 11, the rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) is combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the planetary gear set (DG101) is also fixed in the housing (H100), the rocker arm (A101) linked by the planetary wheel (W103) of the planetary gear set (DG101) is provided for driving the rotation shaft (SI02) to be served as an output/input end, and the rotation shaft (S102) or the rocker arm (A101) is connected to an action side of the controllable brake device (BK102) while the other action side of the controllable brake device (BK102) is fixed in the housing (H100), which mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (SI02) or the rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) of the planetary gear set (DG101) combined with the rotation shaft (S102) is served as an output/input end, the outer annular wheel (W102) is combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the rocker arm (A101) linked by the planetary wheel (W103) of the planetary gear set (DG101) is provided for driving the rotation shaft (SI02) to be served as an output/input end, and the rotation shaft (S102) or the rocker arm (A101) is connected to an action side of the controllable brake device (BK102) while the other action side of the controllable brake device (BK102) is fixed in the housing (H100).

According to the embodiment shown in FIG. 11, the operations include one or more than one of following functions:
--When the controllable brake device (BK101) and the controllable brake device (BK102) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the dual-drive electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK102) is controlled to be in the releasing state, and the dual-drive electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS 101) is in a connecting relation allowing for transmission;
--When the controllable brake device (BK101) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 12 is a schematic structural view showing the controllable brake device (BK103) being further installed between the rotation shaft (S101) and the housing (H100) as shown in FIG. 9.

As shown in FIG. 12, the rotation shaft (SI01) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100), the planetary gear set (DG101) is also fixed in the housing (H100), the outer annular wheel (W102) of the planetary gear set (DG101) combined with the outer rotation part of electric machine (EM102) and combined with the sleeve type rotation shaft (AS101), the sleeve type rotation shaft (AS101) rotated and sleeved on the rotation shaft (S101) is served as an output/input end, the planetary wheel (W103) of the planetary gear set (DG101) is provided for linking the rocker arm (A101) and driving the rotation shaft (SI02) to be served as an output/input end, and the rotation shaft (SI02) or the rocker arm (A101) is connected to an action side of the controllable brake device (BK102) while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (SI02) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S 101), and the outer rotation part of electric machine (EM102) is combined with the outer annular wheel (W102);
-- The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100); the rocker arm (A101) linked by the planetary wheel (W103) of the planetary gear set (DG101) is combined with the rotation shaft (S102) for being served as an output/input end, the rotation shaft (S102) or the rocker arm (A101) is connected to an action side of the controllable brake device (BK102) while the other action side of the controllable brake device (BK102) is fixed in the housing (H100), the outer annular wheel (W102) is combined with the outer rotation part of electric machine (EM102) and combined with the sleeve type rotation shaft (AS 101), and the sleeve type rotation shaft (AS101) rotated and sleeved on the rotation shaft (S101) is served as an output/input end.

According to the embodiment shown in FIG. 12, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS 101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state;
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 13 is a schematic structural view showing the controllable brake device (BK101) being further installed between the sleeve type rotation shaft (AS101) and the housing (H100) as shown in FIG. 10.

As shown in FIG. 13, the rotation shaft (SI01) shared by the sun wheel (W101) of the planetary gear set (DG101) and the inner rotation part of electric machine (EM101) of the dual-drive electric machine (EM100) is served as an output/input end and is provided for connecting to an action side of the controllable brake device (BK103) while the other action side of the controllable brake device (BK103) is fixed in the housing (H100), the outer annular wheel (W102) of the planetary gear set (DG101) combined with the outer rotation part of electric machine (EM102) and combined to the sleeve type rotation shaft (AS101), the sleeve type rotation shaft (AS101) is rotated and sleeved on the rotation shaft (S101) for being served as an output/input end, the sleeve type rotation shaft (AS 101) is connected to an action side of the controllable brake device (BK101) while the other action side of the controllable brake device (BK101) is fixed in the housing (HI00), the shell of the planetary gear set (DG101) also is fixed in the housing (H100), and the planetary wheel (W103) of the planetary gear set (DG101) is provided for linking the rocker arm (A101) and driving the rotation shaft (S102) to be served as an output/input end, which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S 101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (H100), and the planetary wheel (W103) of the planetary gear set (DG101) is provided for linking the rocker arm (A101) and driving the rotation shaft (SI02) to be served as an output/input end.

According to the embodiment shown in FIG. 13, the operations include one or more than one of following functions:
--When the controllable brake device (BK101) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state and the controllable brake device (BK103) is controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the dual-drive electric machine (EM100) is not operated as the electric machinery function, the transmission relation between the rotation shaft (SI02) and the sleeve type rotation shaft (AS 101) is in a connecting relation allowing for transmission;
--When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS 101) are all in the brake locking state.
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 14 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end and being provided for connecting to an action side of the controllable brake device (BK103) while the other action side of the controllable brake device (BK103) being fixed in the housing (H100), the outer annular wheel (W102) of the planetary gear set (DG101) being combined with the outer rotation part of electric machine (EM102) and combined to the sleeve type rotation shaft (AS 101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the planetary gear set (DG101) also being fixed in the housing (H100), and the planetary wheel (W103) of the planetary gear set (DG101) being provided for linking the rocker arm (A101) and driving the rotation shaft (SI02) to be served as an output/input end, and the rotation shaft (S102) or the rocker arm (A101) being connected to an action side of the controllable brake device (BK102) while the other action side of the controllable brake device (BK102) being fixed in the housing (H100), according to one embodiment of the present invention.

As shown in FIG. 14, the rotation shaft (SI01) shared by the sun wheel (W101) of the planetary gear set (DG101) and the inner rotation part of electric machine (EM101) of the dual-drive electric machine (EM100) is served as an output/input end and is provided for connecting to an action side of the controllable brake device (BK103) while the other action side of the controllable brake device (BK103) is fixed in the housing (H100), the outer annular wheel (W102) of the planetary gear set (DG101) is combined to the outer rotation part of electric machine (EM102) and combined to the sleeve type rotation shaft (AS101), the sleeve type rotation shaft (AS101) is rotated and sleeved on the rotation shaft (S101) for being served as an output/input end, the sleeve type rotation shaft (AS 101) is connected to an action side of the controllable brake device (BK101) while the other action side of the controllable brake device (BK101) is fixed in the housing (HI00), the planetary gear set (DG101) is also fixed in the housing (H100), and the planetary wheel (W103) of the planetary gear set (DG101) is provided for linking the rocker arm (A101) and driving the rotation shaft (SI02) to be served as an output/input end, and the rotation shaft (SI02) or the rocker arm (A101) is connected to an action side of the controllable brake device (BK102), and the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (SI02) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end and is connected to an action side of the controllable brake device (BK101) while the other action side of the controllable brake device (BK101) is fixed in the housing (H100), the planetary wheel (W103) of the planetary gear set (DG101) is provided for linking the rocker arm (A101) and driving the rotation shaft (SI02) to be served as an output/input end, and the rotation shaft (S102) or the rocker arm (A101) is connected to an action side of the controllable brake device (BK102) while the other action side of the controllable brake device (BK102) is fixed in the housing (H100).

According to the embodiment shown in FIG. 14, the operations include one or more than one of following functions:
--When the controllable brake device (BK101) and the controllable brake device (BK102) and the controllable brake device (BK103) are all controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S 101), the rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the dual-drive electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state, the controllable brake device (BK102) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK102) is controlled to be in the brake locking state, the controllable brake device (BK101) and the controllable brake device (BK103) are controlled to be in the releasing state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the dual-drive electric machine (EM100) is not operated as the electric machinery function, the transmission relation between the rotation shaft (S102) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (SI02) and the sleeve type rotation shaft (AS101) are all in the brake locking state;

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

The dual-drive electric machine having a controllable planetary gear set of the present invention, in which an inner rotation part of electric machine (EM101) of the dual-drive electric machine (EM100) is further together with a planetary wheel (W103) of the planetary gear set (DG101) and the rocker arm (A101) to jointly combined on a rotation shat (S102) for serving as an output/input end, and the sun wheel (W101) combined on the rotation shaft (S101) is served as an output/input end, and the outer annular wheel (W102) of the planetary gear set (DG101) combined with an outer rotation part of electric machine (EM102) and a sleeve type rotation shaft (AS101) is served as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (S102) at the output/input end and the sleeve type rotation shaft (AS101) at the output/input end of the planetary gear set (DG101) are enabled to be controlled, and the interactive operations between the dual-drive electric machine (EM100) and the output/input ends are also enabled to be controlled.

FIG. 15 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the outer annular wheel (W102) being combined with the outer rotation part of electric machine (EM102) and combined with the sleeve type rotation shaft (AS101), the sleeve type rotation shaft (AS101) rotated and sleeved on the rotation shaft (S101) being served as an output/input shaft and being provided for connecting to an action side of the controllable brake device (BK101) while the other action side of the controllable brake device (BK101) being fixed in the housing (H100), and the planetary gear set (DG101) also being fixed in the housing (H100), according to one embodiment of the present invention.

As show in FIG 15, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM 102) are coaxially rotated, wherein the inner rotation part of electric machine (EM101) is combined with the rotation shaft (S 102), and the outer rotation part of electric machine (EM102) is combined with the outer annular wheel (W102);
--The inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) combined on the rotation shaft (S101) is served as an output/input end, the outer annular wheel (A102) is combined with the outer rotation part of electric machine (EM102) and combined with the sleeve type rotation shaft (AS101), the sleeve type rotation shaft (AS 101) rotated and sleeved on the rotation shaft (S101) is served as an output/input end, the sleeve type rotation shaft (AS 101) is connected to an action side of the controllable brake device (BK101) while the other action side of the controllable brake device (BK101) is fixed in the housing (H100), and the rotation shaft (S101) combined with the sun wheel (W101) is also served as an output/input end;

According to the embodiment shown in FIG. 15, the operations include one or more than one of following functions:
--When the controllable brake device (BK101) is controlled to be in the releasing state, and the dual-drive electric machine (EM100) is not operated as the electric machinery function, the transmission relations between the rotation shaft (S101) and the rotation shaft (S102) and the sleeve type rotation shaft (AS 101) are in the releasing state allowing idle rotation;
-- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 16 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input shaft, and the rotation shaft (S102) being connected to an action side of the controllable brake device (BK102) while the other action side of the controllable brake device (BK102) being fixed in the housing (H100), according to one embodiment of the present invention.

As show in FIG 16, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102));
--The inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) combined on the rotation shaft (S101) is served as an output/input end, the outer annular wheel (W102) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
--The planetary wheel (W103) of the planetary gear set (DG101), the rocker arm (A101) and the inner rotation part of electric machine (EM101) are jointly combined on the rotation shaft (S102) to be served as an output/input end, and the rotation shaft (S102) is connected to an action side of the controllable brake device (BK102) while the other action side of the controllable brake device (BK102) is fixed in the housing (H100);

According to the embodiment shown in FIG. 16, the operations include one or more than one of following functions:
--When the controllable brake device (BK102) is controlled to be in the releasing state, and the dual-drive electric machine (EM100) is not operated as the electric machinery function, the transmission relations between the rotation shaft (S101) and the sleeve type rotation shaft (AS 101) and the rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 17 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the rotation shaft (S101) being connected to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and combined with the sleeve type rotation shaft (AS101), and the sleeve type rotation shaft (AS101) being served as an output/input end, according to one embodiment of the present invention.

As show in FIG 17, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
-- Rocker arm (A101): having one end provided for allowing the planetary wheel (W103) to rotate and link, and the other end being connected to the inner rotation part of electric machine (EM101) and the rotation shaft (S102);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The sun wheel (W101) of the planetary gear set (DG101) is combined on the rotation shaft (S101), and the rotation shaft (S101) is connected to an action side of the controllable brake device (BK103) while the other action side of the controllable brake device (BK103) is fixed in the housing (H100);
--The outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end, and the rotation shaft (S101) combined with the sun wheel (W101) is also served as an output/input end;

According to the embodiment shown in FIG. 17, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS 101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 18 is a schematic structural view showing the controllable brake device (BK102) being further installed between the rotation shaft (SI02) and the housing (H100) as shown in FIG. 15.

As shown in FIG. 18, the inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, the outer annular wheel (W102) is combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the planetary gear set (DG101) is also fixed in the housing (H100), and the rotation shaft (SI02) is connected to an action side of the controllable brake device (BK102) while the other action side of the controllable brake device (BK102) is fixed in the housing (H100), which mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
-- The inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, the outer annular wheel (W102) is combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), and the rotation shaft (S102) is connected to an action side of the controllable brake device (BK102) while the other action side of the controllable brake device (BK102) is fixed in the housing (H100);

According to the embodiment shown in FIG. 18, the operations include one or more than one of following functions:
--When the controllable brake device (BK101) and the controllable brake device (BK102) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state and the controllable brake device (BK102) is controlled to be in the releasing state, and the dual-drive electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS 101) is in a connecting relation allowing for transmission;
--When the controllable brake device (BK101) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 19 is a schematic structural view showing the controllable brake device (BK103) being further installed between the rotation shaft (S101) and the housing (H100) as shown in FIG. 16.

As shown in FIG. 19, the inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, the rotation shaft (S101) is connected to an action side of the controllable brake device (BK103) while the other action side of the controllable brake device (BK103) is fixed in the housing (H100), the planetary gear set (DG101) is also fixed in the housing (H100), the outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end, and the rotation shaft (SI02) is connected to an action side of the controllable brake device (BK102) while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S 102), and the outer rotation part of electric machine (EM102) is combined with the outer annular wheel (W102);
-- The inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, the rotation shaft (S101) is connected to an action side of the controllable brake device (BK103) while the other action side of the controllable brake device (BK103) is fixed in the housing (H100); the rocker arm (A101) linked by the planetary wheel (W103) of the planetary gear set (DG101) is combined with the rotation shaft (S102) for being served as an output/input end, the rotation shaft (S102) is connected to an action side of the controllable brake device (BK102) while the other action side of the controllable brake device (BK102) is fixed in the housing (H100), the outer annular wheel (W102) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;

According to the embodiment shown in FIG. 19, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS 101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 20 is a schematic structural view showing the controllable brake device (BK101) being further installed between the sleeve type rotation shaft (AS101) and the housing (H100) as shown in FIG. 17.

As shown in FIG. 20, the inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, the rotation shaft (S101) is connected to an action side of the controllable brake device (BK103) while the other action side of the controllable brake device (BK103) is fixed in the housing (H100), the outer annular wheel (W102) of the planetary gear set (DG101) is combined with the outer rotation part of electric machine (EM102) and combined to the sleeve type rotation shaft (AS101), the sleeve type rotation shaft (AS 101) is rotated and combined on the rotation shaft (S101) for being served as an output/input end, the sleeve type rotation shaft (AS 101) is connected to an action side of the controllable brake device (BK101) while the other action side of the controllable brake device (BK101) is fixed in the housing (H100), the planetary gear set (DG101) also is fixed in the housing (H100), and the planetary wheel (W103) of the planetary gear set (DG101) is provided for linking the rocker arm (A101) and the inner rotation part of electric machine (EM101) and connecting with the rotation shaft (SI02) to be served as an output/input end, which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
-- The inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, and the rotation shaft (S101) is connected to an action side of the controllable brake device (BK103), and the other action side of the controllable brake device (BK103) is fixed in the housing (H100);
--The outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end, the sleeve type rotation shaft (AS 101) is connected to an action side of the controllable brake device (BK101) while the other action side of the controllable brake device (BK101) is fixed in the housing (H100), and the planetary wheel (W103) of the planetary gear set (DG101) is provided for linking the rocker arm (A101) and the inner rotation part of electric machine (EM101) and connecting with the rotation shaft (S102) to be served as an output/input end;

According to the embodiment shown in FIG. 20, the operations include one or more than one of following functions:
--When the controllable brake device (BK101) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the dual-drive electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK103) is controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the dual-drive electric machine (EM100) is not operated as the electric machinery function, the transmission relation between the rotation shaft (SI02) and the sleeve type rotation shaft (AS 101) is in a connecting relation allowing for transmission;
--When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state.
   The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
   The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 21 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, and the sun wheel (W101) being combined on the rotation shaft (S101) for being served as an output/input end, the rotation shaft (S101) being connected to an action side of the controllable brake device (BK103) while the other action side of the controllable brake device (BK103) being fixed in the housing (H100), the outer annular wheel (W102) of the planetary gear set (DG101) being combined with the outer rotation part of electric machine (EM102) and combined to the sleeve type rotation shaft (AS 101), the sleeve type rotation shaft (AS 101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the planetary gear set (DG101) also being fixed in the housing (H100), and the rotation shat (S102) being connected to an action side of the controllable brake device (BK102) while the other action side of the controllable brake device (BK102) being fixed in the housing (H100), according to one embodiment of the present invention.

As shown in FIG. 21, the inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, the sun wheel (W101) is combined on the rotation shaft (S101) for being served as an output/input end, the rotation shaft (S101) is connected to an action side of the controllable brake device (BK103) while the other action side of the controllable brake device (BK103) is fixed in the housing (H100), the outer annular wheel (W102) of the planetary gear set (DG101) is combined with the outer rotation part of electric machine (EM102) and combined with the sleeve type rotation shaft (AS101), the sleeve type rotation shaft (AS101) is rotated and sleeved on the rotation shaft (S101) for being served as an output/input end, the sleeve type rotation shaft (AS 101) is connected to an action side of the controllable brake device (BK101) while the other action side of the controllable brake device (BK101) is fixed in the housing (H100), the planetary gear set (DG101) is also fixed in the housing (H100), the planetary wheel (S103) of the planetary gear set (DG101) is provided for linking the rocker arm (A101) and the inner rotation part of electric machine (EM101) and connecting to the rotation shaft (S102) to be served as an output/input end, and the rotation shaft (S102) is connected to an action side of the controllable brake device (BK102)while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The inner rotation part of electric machine (EM101) of the dual-drive electric machine (EM100) and the planetary wheel (W103) of the planetary gear set (DG101) and the rocker arm (A101) are jointly combined on the rotation shaft (SI02) for being served as an output/input end, and the sun wheel (W101) is combined on the rotation shaft (S101) for being served as an output/input end, and the rotation shaft (S101) is connected to one action side of the controllable brake device (BK103) while the other action side of the controllable brake device (BK103) is fixed in the housing (H100);
--The outer rotation part of electric machine (EM102) is combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the planetary wheel (W103) of the planetary gear set (DG101) is provided for linking the rocker arm (A101) and the inner rotation part of electric machine (EM101), as well as combing with the rotation shaft (SI02) to be served as an output/input end, and the rotation shaft (SI02) is connected to an action side of the controllable brake device (BK102) while the other action side of the controllable brake device (BK102) is fixed in the housing (H100);
   According to the embodiment shown in FIG. 21, the operations include one or more than one of following functions:
   --When the controllable brake device (BK101) and the controllable brake device (BK102) and the controllable brake device (BK103) are all controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
   -- When the controllable brake device (BK101) and the controllable brake device (BK102) and the controllable brake device (BK103) are all controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
   --When the controllable brake device (BK101) is controlled to be in the brake locking state, the controllable brake device (BK102) and the controllable brake device (BK103) are controlled to be in the releasing state, and the dual-drive electric machine (EM100) is not operated as the electric machinery function, the transmission relation between the rotation shaft (S101) and the rotation shaft (SI02) is in a connecting relation allowing for transmission;
   --When the controllable brake device (BK101) is controlled to be in the brake locking state, the controllable brake device (BK102) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
   --When the controllable brake device (BK102) is controlled to be in the brake locking state, the controllable brake device (BK101) and the controllable brake device (BK103) are controlled to be in the releasing state, and the dual-drive electric machine (EM100) is not operated as the electric machinery function, the transmission relation between the rotation shaft (S101) and the sleeve type rotation shaft (AS 101) is in a connecting relation allowing for transmission;
   --When the controllable brake device (BK102) is controlled to be in the brake locking state, the controllable brake device (BK101) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
   --When the controllable brake device (BK103) is controlled to be in the brake locking state, the controllable brake device (BK101) and the controllable brake device (BK102) are controlled to be in the releasing state, and the dual-drive electric machine (EM100) is not operated as the electric machinery function, the transmission relation between the rotation shaft (S102) and the sleeve type rotation shaft (AS101) is in a connecting relation allowing for transmission;
   --When the controllable brake device (BK103) is controlled to be in the brake locking state, the controllable brake device (BK101) and the controllable brake device (BK102) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
   --When two or all of the controllable brake device (BK101) and the controllable brake device (BK102) and the controllable brake device (BK103) are controlled to be in the brake locking state, the relations between the rotation shaft (S101), the rotation shaft (SI02) and the sleeve type rotation shaft (AS 101) are all in the brake locking state;
      The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
      The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

The electric machine having controllable planetary gear set of the present invention can be applied to various load devices which require mechanical output for driving, such as a ground vehicle, rail vehicle, agriculture machineries or agriculture vehicles, excavator, dozer, construction vehicle, transportation vehicle, garbage truck, hoisting machinery, lifting machinery, forklift machinery, water or underwater boat, aircraft, industrial machineries, tool machine, power device, hand-operated tool, robot or mechanical arm, gardening power tool, domestic electric equipment;
According to the electric machine having controllable planetary gear set of the present invention, the sources of externally inputted rotary kinetic energy include an inner combustion engine, an outer combustion engine, a Sterling engine, a steam engine, electric engine, hydraulic engine, pneumatic engine, wind-driven blade device, flow-driven blade device, vapor-driven blade device, human or animal forces.

## Claims

1. An electric machine in combination with a controllable planetary gear set (DG101), in which an inner rotation part (EM101) of the electric machine and an outer rotation part (EM102) of the electric machine (EM100) are respectively combined with two of the three output/input ends of the planetary gear set, which comprises a sun wheel (W101), an outer annular wheel (W102) and a planet carrier (A101) which carries a planetary wheel (W103) of the planetary gear set (DG101) to perform transmission, and one of the three output/input ends unconnected with the electric machine is served for external output, and one or more of the three output/input ends are connected to an action side of a controllable brake device (BK101), and the other action side of the controllable brake device is connected to a housing (H100); through controlling the controllable brake device, the transmission functional operations between a first rotation shaft (S101) at the output/input end, a second rotation shaft (S102) at the output/input end and a sleeve type rotation shaft (AS 101), which is rotated and sleeved on the first rotation shaft (S101) at the output/input end of the planetary gear set (DG101) are enabled to be controlled, and the interactive operations between the electric machine (EM100) and the output/input ends are also enabled to be controlled, wherein at least the sleeve type rotation shaft (AS101) is connected to an action side of the controllable brake device (BK101).

2. An electric machine comprising a controllable planetary gear set as claimed in claim 1, in which the inner rotation part of the electric machine (EM101) of the electric machine (EM100) is combined with the sun wheel (W101)and combined with the rotation shaft (S101) and serves as an output/input end, the rotation shaft (SI02) is combined with the outer annular wheel (W102) to serve as an output/input end, and the planet carrier (A101) is linked to the planetary wheel (W103) of the planetary gear set (DG101) combined with the outer rotation part of electric machine (EM102) and combined with the sleeve type rotation shaft (AS101) to serve as an output/input end.

3. An electric machine comprising a controllable planetary gear set as claimed in claim 2, wherein another action side of the controllable brake device (BK101) is fixed in the housing (H100), the planetary gear set (DG101) also is fixed in the housing (H100), and the outer annular wheel (W102) is provided for driving the rotation shaft (S102) to serve as an output/input end, which mainly consists of:
-- Planetary gear set (DG101): including through gears engaging with each other, or through friction wheels mutually performing friction transmissions to form an planetary gear set function, and comprising a bearing, as well as installed with a shell for being combined in the housing (H100);
--Planet Carrier (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein the other action side is fixed in the housing (H100);
--electric machine (EM100): constituted by a DC or AC, brush or brushless, synchronous or non-synchronous electric machine, having an inner rotation part (EM101) and an outer rotation part (EM102), and installed with end covers, bearings and related electric conduction devices used to introduce electric energy, the inner rotation part (EM101) and the outer rotation part (EM102) are coaxially rotated, wherein the inner rotation part (EM101) is combined with the rotation shaft (S101), and the outer rotation part (EM102) is combined with the planet carrier (A101);
The operations include one or more than one of following functions:
--When the controllable brake device (BK101) is controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) is controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, and the electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

4. An electric machine comprising a controllable planetary gear set as claimed in claim 2, wherein another action side of the controllable brake device (BK101) is fixed in the housing (H100), the planetary gear set (DG101) is also fixed in the housing (H100), the outer annular wheel (W102) is provided for driving the rotation shaft (S102) to serve as an output/input end, and the rotation shaft (SI02) is connected to an action side of a controllable brake device (BK102) while the other action side of the controllable brake device (BK102) is fixed in the housing (H100), which mainly consists of:
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S 102), and the other action side is fixed in the housing (H100);
The operations include one or more than one of following functions:
--When the controllable brake device (BK101) and the controllable brake device (BK102) are both controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK102) are both controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK102) is controlled to be in the releasing state, and the electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the electric machine (EM100) is not operated as the electric machinery function, the transmission relation between the rotation shaft (S101) and the sleeve type rotation shaft (AS101) is in a connecting relation allowing for transmission;
--When the controllable brake device (BK101) is controlled to be in the releasing state and the controllable brake device (BK102) is controlled to be in the brake locking state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

5. An electric machine comprising a controllable planetary gear set as claimed in claim 2, wherein the rotation shaft (S101) is served as an output/input end and provided for connecting to an action side of a controllable brake device (BK103) while the other action side of the controllable brake device (BK103) is fixed in the housing (H100), another action side of the controllable brake device (BK101) is fixed in the housing (H100), the planetary gear set (DG101) is also fixed in the housing (H100), and the outer annular wheel (W102) of the planetary gear set (DG101) is provided for driving the rotation shaft (S102) to serve as an output/input end, which mainly consists of:
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
The operations include one or more than one of following functions:
--When the controllable brake device (BK101) and the controllable brake device (BK103) are both controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK103) are both controlled to be in the releasing state, and the electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK103) is controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the electric machine (EM100) is not operated as the electric machinery function, the transmission relation between the rotation shaft (SI02) and the sleeve type rotation shaft (AS101) is in a connecting relation allowing for transmission;
--When the controllable brake device (BK101) is controlled to be in the releasing state and the controllable brake device (BK103) is controlled to be in the brake locking state, and the electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (SI02) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

6. An electric machine comprising a controllable planetary gear set as claimed in claim 2, wherein the rotation shaft (S101) serves as an output/input end and is provided for connecting to an action side of a controllable brake device (BK103) while the other action side of the controllable brake device (BK103) is fixed in the housing (H100), and the rotation shaft (S102) is connected to an action side of a controllable brake device (BK102) while the other action side of the controllable brake device (BK102) is fixed in the housing (H100);
The operations include one or more than one of following functions:
--When the controllable brake device (BK101) and the controllable brake device (BK102) and the controllable brake device (BK103) are all controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (SI02) and the sleeve type rotation shaft (AS101);
--When the controllable brake device (BK101) is controlled to be in the brake locking state, the controllable brake device (BK102) and the controllable brake device (BK103) are controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state, the controllable brake device (BK102) and the controllable brake device (BK103) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK102) is controlled to be in the brake locking state, the controllable brake device (BK101) and the controllable brake device (BK103) are controlled to be in the releasing state, and the electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the electric machine (EM100) is not operated as the electric machinery function, the transmission relation between the rotation shaft (SI02) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

7. An electric machine comprising a controllable planetary gear set as claimed in claim 1, wherein the inner rotation part of the electric machine (EM101) of the electric machine (EM100) is combined with the sun wheel (W101) and combined with the rotation shaft (S101) to serve as an output/input end, the rotation shaft (SI02) is connected with the planet carrier (A101) linked by the planetary wheel (W103) to serve as an output/input end, and the outer annular wheel (W102) is combined with the outer rotation part of electric machine (EM102) and combined with the sleeve type rotation shaft (AS101) to serve as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (SI02) at the output/input end and the sleeve type rotation shaft (AS101) at the output/input end of the planetary gear set (DG101) are enabled to be controlled, and the interactive operations between the electric machine (EM100) and the output/input ends are also enabled to be controlled.

8. An electric machine comprising a controllable planetary gear set as claimed in claim 7, wherein another action side of the controllable brake device (BK101) is fixed in the housing (H100), the planetary gear set (DG101) also is fixed in the housing (H100), and the planet carrier (A101) linked by the planetary wheel (W103) of the planetary gear set (DG101) is provided for driving the rotation shaft (SI02) to be served as an output/input end, which mainly consists of:
The operations include one or more than one of following functions:
--When the controllable brake device (BK101) is controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) is controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (SI02) and the sleeve type rotation shaft (AS101);
--When the controllable brake device (BK101) is controlled to be in the brake locking state, and the electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

9. An electric machine comprising a controllable planetary gear set as claimed in claim 7, wherein another action side of the controllable brake device (BK101) is fixed in the housing (H100), the planetary gear set (DG101) is also fixed in the housing (H100), the planet carrier (A101) linked by the planetary wheel (W103) of the planetary gear set (DG101) is provided for driving the rotation shaft (SI02) to be served as an output/input end, and the rotation shaft (S102) or the planet carrier (A101) is connected to an action side of a controllable brake device (BK102) while the other action side of the controllable brake device (BK102) is fixed in the housing (H100);
The operations include one or more than one of following functions:
--When the controllable brake device (BK101) and the controllable brake device (BK102) are both controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK102) are both controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK102) is controlled to be in the releasing state, and the electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the electric machine (EM100) is not operated as the electric machinery function, the transmission relation between the rotation shaft (S101) and the sleeve type rotation shaft (AS101) is in a connecting relation allowing for transmission;
--When the controllable brake device (BK101) is controlled to be in the releasing state and the controllable brake device (BK102) is controlled to be in the brake locking state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

10. An electric machine comprising a controllable planetary gear set as claimed in claim 7, wherein the rotation shaft (S101) is provided for connecting to an action side of a controllable brake device (BK103) while the other action side of the controllable brake device (BK103) is fixed in the housing (H100), another action side of the controllable brake device (BK101) is fixed in the housing (H100), the shell of the planetary gear set (DG101) also is fixed in the housing (H100), and the planetary wheel (W103) of the planetary gear set (DG101) is provided for linking the planet carrier (A101) and driving the rotation shaft (SI02) to be served as an output/input end,;
The operations include one or more than one of following functions:
--When the controllable brake device (BK101) and the controllable brake device (BK103) are both controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK103) are both controlled to be in the releasing state, and the electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK103) is controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the electric machine (EM100) is not operated as the electric machinery function, the transmission relation between the rotation shaft (SI02) and the sleeve type rotation shaft (AS101) is in a connecting relation allowing for transmission;
--When the controllable brake device (BK101) is controlled to be in the releasing state and the controllable brake device (BK103) is controlled to be in the brake locking state, and the electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (SI02) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

11. An electric machine comprising a controllable planetary gear set as claimed in claim 7, wherein the rotation shaft (S101) is provided for connecting to an action side of a controllable brake device (BK103) while the other action side of the controllable brake device (BK103) is fixed in the housing (H100), another action side of the controllable brake device (BK101) is fixed in the housing (H100), the planetary gear set (DG101) is also fixed in the housing (H100), and the planetary wheel (W103) of the planetary gear set (DG101) is provided for linking the planet carrier (A101) and driving the rotation shaft (S102) to be served as an output/input end, and the rotation shaft (SI02) or the planet carrier (A101) is connected to an action side of a controllable brake device (BK102), and the other action side of the controllable brake device (BK102) is fixed in the housing (H100);
The operations include one or more than one of following functions:
--When the controllable brake device (BK101) and the controllable brake device (BK102) and the controllable brake device (BK103) are all controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state, the controllable brake device (BK102) and the controllable brake device (BK103) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK102) is controlled to be in the brake locking state, the controllable brake device (BK101) and the controllable brake device (BK103) are controlled to be in the releasing state, and the electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the electric machine (EM100) is not operated as the electric machinery function, the transmission relation between the rotation shaft (SI02) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

12. An electric machine comprising a controllable planetary gear set as claimed in claim 1, wherein the inner rotation part of electric machine (EM101) of the electric machine (EM100) is combined with the planetary wheel (W103) of the planetary gear set (DG101) and the planet carrier (A101) to jointly combine on a rotation shaft (S102) for serving as an output/input end, and the sun wheel (W101) combined on the rotation shaft (S101) is served as an output/input end, and the outer annular wheel (W102) of the planetary gear set (DG101) combined with an outer rotation part of electric machine (EM102) and a sleeve type rotation shaft (AS101) is served as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (SI02) at the output/input end and the sleeve type rotation shaft (AS101) at the output/input end of the planetary gear set (DG101) are enabled to be controlled, and the interactive operations between the electric machine (EM100) and the output/input ends are also enabled to be controlled.

13. An electric machine comprising a controllable planetary gear set as claimed in claim 12, another action side of the controllable brake device (BK101) is fixed in the housing (H100), and the planetary gear set (DG101) also is fixed in the housing (H100);
The operations include one or more than one of following functions:
--When the controllable brake device (BK101) is controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) is controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (SI02) and the sleeve type rotation shaft (AS101);
--When the controllable brake device (BK101) is controlled to be in the brake locking state, and the electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

14. An electric machine comprising a controllable planetary gear set as claimed in claim 12, wherein an other action side of the controllable brake device (BK101) is fixed in the housing (H100), the planetary gear set (DG101) is also fixed in the housing (H100), and the rotation shaft (SI02) is connected to an action side of a controllable brake device (BK102) while the other action side of the controllable brake device (BK102) is fixed in the housing (H100);
The operations include one or more than one of following functions:
--When the controllable brake device (BK101) and the controllable brake device (BK102) are both controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK102) are both controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK102) is controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK102) is controlled to be in the releasing state, and the electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
--When the controllable brake device (BK101) is controlled to be in the releasing state and the controllable brake device (BK102) is controlled to be in the brake locking state, and the electric machine (EM100) is not operated as the electric machinery function, the transmission relation between the rotation shaft (S101) and the sleeve type rotation shaft (AS101) is in a connecting relation allowing for transmission;
--When the controllable brake device (BK101) is controlled to be in the releasing state and the controllable brake device (BK102) is controlled to be in the brake locking state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

15. An electric machine comprising a controllable planetary gear set as claimed in claim 12, the rotation shaft (S101) is connected to an action side of a controllable brake device (BK103) while the other action side of the controllable brake device (BK103) is fixed in the housing (H100), another action side of the controllable brake device (BK101) is fixed in the housing (H100), the planetary gear set (DG101) also is fixed in the housing (H100), and the planetary wheel (W103) of the planetary gear set (DG101) is provided for linking the planet carrier (A101) and the inner rotation part of electric machine (EM101) and connecting with the rotation shaft (SI02) to be served as an output/input end;
The operations include one or more than one of following functions:
--When the controllable brake device (BK101) and the controllable brake device (BK103) are both controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK103) are both controlled to be in the releasing state, and the electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state and the controllable brake device (BK103) is controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state and the controllable brake device (BK103) is controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK101) is controlled to be in the releasing state and the controllable brake device (BK103) is controlled to be in the brake locking state, and the electric machine (EM100) is not operated as the electric machinery function, the transmission relation between the rotation shaft (SI02) and the sleeve type rotation shaft (AS101) is in a connecting relation allowing for transmission;
--When the controllable brake device (BK101) is controlled to be in the releasing state and the controllable brake device (BK103) is controlled to be in the brake locking state, and the electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (SI02) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

16. An electric machine having a controllable planetary gear set as claimed in claim 12, wherein the rotation shaft (S101) is connected to an action side of a controllable brake device (BK103) while the other action side of the controllable brake device (BK103) is fixed in the housing (H100), another action side of the controllable brake device (BK101) is fixed in the housing (H100), the planetary gear set (DG101) is also fixed in the housing (H100), the planetary wheel (S103) of the planetary gear set (DG101) is provided for linking the planet carrier (A101) and the inner rotation part of electric machine (EM101) and connecting to the rotation shaft (SI02) to be served as an output/input end, and the rotation shaft (S102) is connected to an action side of a controllable brake device (BK102) while the other action side of the controllable brake device (BK102) is fixed in the housing (H100), which mainly consists of:
The operations include one or more than one of following functions:
--When the controllable brake device (BK101) and the controllable brake device (BK102) and the controllable brake device (BK103) are all controlled to be in the releasing state, and the electric machine (EM100) is not operated as the electric machinery function, the transmission relations between the rotation shaft (S101) and the rotation shaft (SI02) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the electric machine (EM100) is not operated as the electric machinery function, the transmission relation between the rotation shaft (S101) and the rotation shaft (SI02) is in a connecting relation allowing for transmission;
--When the controllable brake device (BK101) is controlled to be in the brake locking state, the controllable brake device (BK102) and the controllable brake device (BK103) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
--When the controllable brake device (BK102) is controlled to be in the brake locking state, the controllable brake device (BK101) and the controllable brake device (BK103) are controlled to be in the releasing state, and the electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the electric machine (EM100) is not operated as the electric machinery function, the transmission relation between the rotation shaft (SI02) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
The interactive operations of corresponding function performed by the mentioned electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

## Patentansprüche

1. Elektrische Maschine in Verbindung mit einem steuerbaren Planetengetriebe (DG101), bei dem ein innerer Drehteil (EM101) der elektrischen Maschine und ein äußerer Drehteil (EM102) der elektrischen Maschine (EM100) jeweils mit zwei der drei Abtriebs-/Eingangsenden des Planetengetriebes verbunden sind, das ein Sonnenrad (W101), ein äußeres ringförmiges Rad (W102) und einen Planetenträger (A101) umfasst, der ein Planetenrad (W103) des Planetengetriebes (DG101) trägt, um eine Übertragung durchzuführen, und eines der drei nicht mit der elektrischen Maschine verbundenen Abtriebs-/Eingangsenden zur externen Ausgabe dient, und ein oder mehrere der drei Abtriebs-/Eingangsenden mit einer Wirkseite einer steuerbaren Bremsvorrichtung (BK101) verbunden sind, und die andere Wirkseite der steuerbaren Bremsvorrichtung mit einem Gehäuse (H100) verbunden ist; wobei durch Steuern der steuerbaren Bremsvorrichtung die funktionellen Übertragungsvorgänge zwischen einer ersten Drehwelle (S101) am Abtriebs-/Eingangsende, einer zweiten Drehwelle (S102) am Abtriebs-/Eingangsende und einer hülsenförmigen Drehwelle (AS101), die auf der ersten Drehwelle (S101) am Abtriebs-/Eingangsende des Planetengetriebes (DG101) gedreht und umhüllt wird, und die interaktiven Vorgänge zwischen der elektrischen Maschine (EM100) und den Abtriebs-/Eingangsenden ebenfalls steuerbar sind, wobei zumindest die hülsenförmigen Drehwelle (AS101) mit einer Wirkseite der steuerbaren Bremsvorrichtung (BK101) verbunden ist.

2. Elektrische Maschine, umfassend ein steuerbares Planetengetriebe nach Anspruch 1, wobei der innere Drehteil der elektrischen Maschine (EM101) der elektrischen Maschine (EM100) mit dem Sonnenrad (W101) und mit der Drehwelle (S101) verbunden ist und als Abtriebs-/Eingangsende dient, die Drehwelle (S102) mit dem äußeren ringförmigen Rad (W102) als Abtriebs-/Eingangsende verbunden ist, und der Planetenträger (A101) mit dem Planetenrad (W103) des Planetengetriebes (DG101), der mit dem äußeren Drehteil der elektrischen Maschine (EM102) verbunden ist und der mit der hülsenförmigen Drehwelle (AS101) verbunden ist, um als ein Abtriebs-/Eingangsende zu dienen, verbunden ist.

3. Elektrische Maschine, umfassend ein steuerbares Planetengetriebe, wie in Anspruch 2 beansprucht, wobei eine andere Wirkseite der steuerbaren Bremsvorrichtung (BK101) in dem Gehäuse (H100) befestigt ist, das Planetengetriebe (DG101) ist ebenfalls im Gehäuse (H100) befestigt, und das äußere ringförmige Rad (W102) zum Antreiben der Drehwelle (S102) als Abtriebs-/Eingangsseite vorgesehen ist, die im Wesentlichen aus Folgendem besteht:
-- Planetengetriebe (DG101): beinhaltend durchgehende Zahnräder, die miteinander in Eingriff stehen, oder durchgehende Reibräder, die gegenseitig Reibungsübertragungen ausführen, um die Funktion eines Planetengetriebes auszubilden, und umfassend ein Lager, sowie mit einer Hülle zum Kombinieren im Gehäuse (H100) eingesetzt ist;
-- Planetenträger (A101): mit einem Ende, das vorgesehen ist, um es dem Planetenrad (W103) zu ermöglichen, sich zu drehen und zu verbinden, und wobei sich das andere Ende zur Verbindung mit dem äußeren Drehteil einer elektrischen Maschine (EM102) axial zur Drehwelle (S101) hin erstreckt und mit der hülsenförmigen Drehwelle (AS101) verbunden ist, und die hülsenförmige Drehwelle (AS101) auf eine oder beide der Drehwelle (S101) und der Drehwelle (S102) aufgesteckt ist und in der Lage ist, sich darauf zu drehen;
-- Steuerbare Bremsvorrichtung (BK101): die aus einer Bremsvorrichtung besteht, die durch eine manuelle Kraft oder mechanische Kraft oder hydraulische Kraft oder pneumatische Kraft oder elektromagnetische Kraft gesteuert wird, und zwei steuerbare Wirkseiten für den Betrieb eines Bremsverriegelungszustandes für einen Eingriff oder einen Freigabezustand für die Trennung umfasst, wobei die andere Wirkseite im Gehäuse (H100) befestigt ist;
-- Elektrische Maschine (EM100): bestehend aus einer Gleich- oder Wechselstrom-, Bürsten- oder bürstenlosen, synchronen oder nichtsynchronen elektrischen Maschine, mit einem inneren Drehteil (EM101) und einem äußeren Drehteil (EM102), und mit Endabdeckungen, Lagern und zugehörigen elektrischen Leitungsvorrichtungen, die zur Einleitung elektrischer Energie verwendet werden, eingesetzt ist, wobei das innere Drehteil (EM101) und das äußere Drehteil (EM102) koaxial gedreht werden, wobei das innere Drehteil (EM101) mit der Drehwelle (S101) verbunden ist und das äußere Drehteil (EM102) mit dem Planetenträger (A101) verbunden ist;
Die Vorgänge beinhalten eine oder mehr als eine der folgenden Funktionen:
-- Wenn die steuerbare Bremsvorrichtung (BK101) so gesteuert wird, dass sie sich im Freigabezustand befindet, und die elektrische Maschine (EM100) nicht als die elektrische Maschinenfunktion betrieben wird, befinden sich die Übertragungsbeziehungen zwischen der Drehwelle (S101) und der Drehwelle (S102) und der hülsenartigen Drehwelle (AS101) im Freigabezustand, was eine Leerlaufdrehung ermöglicht;
-- Wenn die steuerbare Bremsvorrichtung (BK101) in den Freigabezustand versetzt wird,
und die elektrische Maschine (EM100) als elektrische Maschinenfunktion betrieben wird, werden die entsprechenden interaktiven Vorgänge der Stromerzeugerfunktion oder der Motorfunktion entsprechend zwischen dem inneren Drehteil der elektrischen Maschine (EM101) und dem äußeren Drehteil der elektrischen Maschine (EM102) gemäß der Dämpfung der äußeren Belastung oder des Drehmoments ausgeführt, wobei die Drehgeschwindigkeit und die Drehrichtung der von außen zugeführten kinetischen Rotationsenergie durch die Drehwelle (S101), die Drehwelle (S102) und die hülsenförmige Drehwelle (AS101) aufgenommen wird;
-- Wenn die steuerbare Bremsvorrichtung (BK101) so gesteuert wird, dass sie sich im Bremsverriegelungszustand befindet, und die elektrische Maschine (EM100) nicht als elektrische Maschinenfunktion betrieben wird, befindet sich das Übersetzungsverhältnis zwischen der Drehwelle (S101) und der Drehwelle (S102) in einer Verbindungsbeziehung, das eine Übertragung ermöglicht;
-- Wenn die steuerbare Bremsvorrichtung (BK101) so gesteuert wird, dass sie sich im Bremsverriegelungszustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als der Motor, um entsprechende interaktive Vorgänge mit der Dämpfung der externen Last oder der von außen zugeführten kinetischen Energie auszuführen, die durch die Drehwelle (S101) und die Drehwelle (S102) aufgenommen werden;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

4. Elektrische Maschine, umfassend ein steuerbares Planetengetriebe nach Anspruch 2, wobei eine andere Wirkseite der steuerbaren Bremsvorrichtung (BK101) in dem Gehäuse (H100) befestigt ist, das Planetengetriebe (DG101) ebenfalls im Gehäuse (H100) befestigt ist, das äußere ringförmige Rad (W102) zum Antreiben der Drehwelle (S102) als Abtriebs-/Eingangsseite vorgesehen ist, und die Drehwelle (S102) mit einer Wirkseite einer steuerbaren Bremsvorrichtung (BK102) verbunden ist, während die andere Wirkseite der steuerbaren Bremsvorrichtung (BK102) im Gehäuse (H100) befestigt ist, das im Wesentlichen besteht aus:
-- Steuerbare Bremsvorrichtung (BK102): die aus einer Bremsvorrichtung besteht, die durch eine manuelle Kraft oder mechanische Kraft oder hydraulische Kraft oder pneumatische Kraft oder elektromagnetische Kraft gesteuert wird, und zwei steuerbaren Wirkseiten für den Betrieb eines Bremsverriegelungszustandes für einen Eingriff oder eines Freigabezustandes für die Trennung umfasst, wobei eine der Wirkseiten mit der Drehwelle (S102) verbunden ist, und die andere Wirkseite im Gehäuse (H100) befestigt ist;
Die Vorgänge beinhalten eine oder mehr als eine der folgenden Funktionen:
-- Wenn die steuerbare Bremsvorrichtung (BK101) und die steuerbare Bremsvorrichtung (BK102) beide so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK102) beide so gesteuert werden, dass sie sich im Freigabezustand befinden, und die elektrische Maschine (EM100) als elektrische Maschinenfunktion betrieben wird, werden die entsprechenden interaktiven Vorgänge von der Stromgeneratorfunktion oder der Motorfunktion entsprechend zwischen dem inneren Drehteil der elektrischen Maschine (EM101) und dem äußeren Drehteil der elektrischen Maschine (EM102) gemäß der Dämpfung der äußeren Last oder des Drehmoments ausgeführt, wobei die Drehgeschwindigkeit und die Drehrichtung der von außen zugeführten kinetischen Rotationsenergie durch die Drehwelle (S101), die Drehwelle (S102) und die hülsenförmige Drehwelle (AS101) aufgenommen wird;
-- Wenn die steuerbare Bremsvorrichtung (BK101) so gesteuert wird, dass sie sich im Bremsverriegelungszustand befindet und die steuerbare Bremsvorrichtung (BK102) so gesteuert wird, dass sie sich im Freigabezustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer Verbindungsbeziehung, die eine Übertragung ermöglicht;
-- Wenn die steuerbare Bremsvorrichtung (BK101) so gesteuert wird, dass sie sich im Bremsverriegelungszustand befindet und die steuerbare Bremsvorrichtung (BK102) so gesteuert wird, dass sie sich im Freigabezustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung der externen Last oder der von außen zugeführten kinetischen Energie auszuführen, die durch die Drehwelle (S101) und die Drehwelle (S102) aufgenommen werden;
-- Wenn die steuerbare Bremsvorrichtung (BK101) so gesteuert wird, dass sie sich im Freigabezustand befindet und die steuerbare Bremsvorrichtung (BK102) so gesteuert wird, dass sie sich im Bremsverriegelungszustand befindet, und die elektrische Maschine (EM100) nicht als elektrische Maschinenfunktion betrieben wird, befindet sich das Übersetzungsverhältnis zwischen der Drehwelle (S101) und der hülsenförmigen Drehwelle (AS101) in einer Verbindungsbeziehung, die eine Übertragung ermöglicht;
-- Wenn die steuerbare Bremsvorrichtung (BK101) so gesteuert wird, dass sie sich im Freigabezustand befindet und die steuerbare Bremsvorrichtung (BK102) so gesteuert wird, dass sie sich im Bremsverriegelungszustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als der Motor, um entsprechende interaktive Vorgänge mit der Dämpfung der externen Last oder der von außen zugeführten kinetischen Energie auszuführen, die durch die Drehwelle (S101) und die hülsenförmige Drehwelle (AS101) aufgenommen werden;
-- Wenn die steuerbare Bremsvorrichtung (BK101) und die steuerbare Bremsvorrichtung (BK102) beide so gesteuert werden, dass sie sich im Zustand der Bremsverriegelung befinden, sind die Beziehungen zwischen der Drehwelle (S101), der Drehwelle (S102) und der hülsenartigen Drehwelle (AS101) alle im Zustand der Bremsenverriegelung;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

5. Elektrische Maschine umfassend ein steuerbares Planetengetriebe nach Anspruch 2, wobei die Drehwelle (S101) als Abtriebs-/Eingangsende dient und zur Verbindung mit einer Wirkseite einer steuerbaren Bremsvorrichtung (BK103) vorgesehen ist, während die andere Wirkseite der steuerbaren Bremsvorrichtung (BK103) in dem Gehäuse (H100) befestigt ist, wobei eine andere Wirkseite der steuerbaren Bremsvorrichtung (BK101) in dem Gehäuse (H100) befestigt ist, wobei das Planetengetriebe (DG101) ebenfalls im Gehäuse (H100) befestigt ist, und das äußere ringförmige Rad (W102) des Planetengetriebes (DG101) zum Antreiben der Drehwelle (S102) als Abtriebs-/Eingangsseite vorgesehen ist, die im Wesentlichen besteht aus:
-- Steuerbare Bremsvorrichtung (BK103): die aus einer durch eine manuelle Kraft oder mechanische Kraft oder hydraulische Kraft oder pneumatische Kraft gesteuerten Bremsvorrichtung besteht oder elektromagnetische Kraft und mit zwei steuerbaren Wirkseiten für den Betrieb eines Bremsverriegelungszustand für den Eingriff oder einen Freigabezustand für die Trennung, wobei eine der Wirkseiten mit der Drehwelle (S101) verbunden ist und die andere Wirkseite im Gehäuse (H100) befestigt ist;
Die Vorgänge beinhalten eine oder mehr als eine der folgenden Funktionen:
-- Wenn die steuerbare Bremsvorrichtung (BK101) und die steuerbare Bremsvorrichtung (BK103) beide so gesteuert werden, dass sie sich im Freigabezustand befinden und die elektrische Maschine (EM100) nicht als elektrische Maschinenfunktion betrieben wird, befindet sich die Übertragungsbeziehungen zwischen der Drehwelle (S101) und der Drehwelle (S102) und der hülsenartigen Drehwelle (AS101) befinden sich im Freigabezustand und erlauben eine Leerlaufdrehung;
-- Wenn die steuerbare Bremsvorrichtung (BK101) und die steuerbare Bremsvorrichtung (BK103) beide so gesteuert werden, dass sie sich im Freigabezustand befinden, und die elektrische Maschine (EM100) wird als elektrische Maschinenfunktion betrieben, der entsprechende interaktive Betrieb der Stromerzeugerfunktion oder der Motorfunktion wird entsprechend zwischen dem inneren Drehteil der elektrischen Maschine (EM101) und dem äußeren Drehteil der elektrische Maschine (EM102) durchgeführt wird, gemäß der Dämpfung der äußeren Last oder der Drehbewegung, Drehmoment, die Drehzahl und die Drehrichtung der von außen zugeführten kinetischen Energie der Drehwelle (S101), der Drehwelle (S102) und der hülsenförmigen Drehwelle (AS101);
-- Wenn die steuerbare Bremsvorrichtung (BK101) so gesteuert wird, dass sie sich im Zustand der Bremsverriegelung befindet und die steuerbare Bremsvorrichtung (BK103) so gesteuert wird, dass sie sich im Freigabezustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer die Übertragung ermöglichenden Verbindungsbeziehung;
-- Wenn die steuerbare Bremsvorrichtung (BK101) so gesteuert wird, dass sie sich im Zustand der Bremsverriegelung befindet und die steuerbare Bremsvorrichtung (BK103) so gesteuert wird, dass sie sich im Freigabezustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und Drehwelle (S102) aufgenommen werden;
-- Wenn die steuerbare Bremsvorrichtung (BK101) so gesteuert wird, dass sie sich im Freigabezustand befindet und die steuerbare Bremsvorrichtung (BK103) so gesteuert wird, dass sie sich im Bremsverriegelungszustand befindet, und die elektrische Maschine (EM100) nicht als elektrische Maschinenfunktion betrieben wird, befindet sich die Übertragungsbeziehung zwischen der Drehwelle (S102) und der hülsenförmigen Drehwelle (AS101) in einer übertragungsfähigen Verbindungsbeziehung;
-- Wenn die steuerbare Bremsvorrichtung (BK101) so gesteuert wird, dass sie sich im Freigabezustand befindet und die steuerbare Bremsvorrichtung (BK103) so gesteuert wird, dass sie sich im Bremsverriegelungszustand befindet, und die elektrische Maschine (EM100) mit der elektrischen Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die hülsenförmige Drehwelle (AS101) aufgenommen werden;
-- Wenn die steuerbare Bremsvorrichtung (BK101) und die steuerbare Bremsvorrichtung (BK102) beide so gesteuert werden, dass sie sich im Bremsverriegelungszustand befinden, befinden sich die Beziehungen zwischen der Drehwelle (S101), der Drehwelle (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

6. Elektrische Maschine umfassend ein steuerbares Planetengetriebe nach Anspruch 2, wobei die Drehwelle (S101) als Abtriebs-/Eingangsende dient und zum Verbinden mit einer Wirkseite einer steuerbaren Bremsvorrichtung (BK103) vorgesehen ist, während die andere Wirkseite der steuerbaren Bremsvorrichtung (BK103) im Gehäuse (H100) befestigt ist, und die Drehwelle (S102) mit einer Wirkseite einer steuerbaren Bremsvorrichtung (BK102) verbunden ist, während die andere Wirkseite der steuerbaren Bremsvorrichtung (BK102) im Gehäuse (H100) befestigt ist;
Die Vorgänge beinhalten eine oder mehr als eine der folgenden Funktionen:
-- Wenn die steuerbare Bremsvorrichtung (BK101) und die steuerbare Bremsvorrichtung (BK102) und die steuerbare Bremsvorrichtung (BK103) alle so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK102) und die steuerbare Bremsvorrichtung (BK103) alle so gesteuert werden, dass sie sich im Freigabezustand befinden, und die elektrische Maschine (EM100) als elektrische Maschinenfunktion betrieben wird, werden die entsprechenden interaktiven Vorgänge der Stromerzeugerfunktion oder der Motorfunktion entsprechend zwischen dem inneren Drehteil von elektrischen Maschine (EM101) und dem äußeren Drehteil der elektrischen Maschine (EM102), gemäß der Dämpfung der äußeren Last oder des Drehmoments, der Drehzahl und der Drehrichtung der von der Drehwelle (S101), der Drehwelle (S102) und der hülsenförmigen Drehwelle (AS101) aufgenommenen kinetischen Energie;
-- Wenn die steuerbare Bremsvorrichtung (BK101) und die steuerbare Bremsvorrichtung (BK102) und die steuerbare Bremsvorrichtung (BK103) so gesteuert werden, dass sie sich im Freigabezustand befinden, und die elektrische Maschine (EM100) nicht als elektrische Maschinenfunktion betrieben wird, befindet sich das Übertragungsverhältnis zwischen der Drehwelle (S101) und der Drehwelle (S102) in einer übertragungsfähigen Verbindungsbeziehung;
-- Wenn die steuerbare Bremsvorrichtung (BK101) so gesteuert wird, dass sie sich im Bremsverriegelungszustand befindet, und die steuerbare Bremsvorrichtung (BK102) und die steuerbare Bremsvorrichtung (BK103) so gesteuert werden, dass sie sich im Freigabezustand befinden, und die elektrische Maschine (EM100) als die elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung der externen Last oder der von außen zugeführten kinetische Energie auszuführen, die durch die Drehwelle (S101) und die Drehwelle (S102) aufgenommen werden;
-- Wenn die steuerbare Bremsvorrichtung (BK102) so gesteuert wird, dass sie sich im Bremsverriegelungszustand befindet, die steuerbare Bremsvorrichtung (BK101) und die steuerbare Bremsvorrichtung (BK103) so gesteuert wird, dass sie sich im Freigabezustand befinden, und die elektrische Maschine (EM100) nicht als elektrische Maschinenfunktion betrieben wird, befindet sich das Übersetzungsverhältnis zwischen der Drehwelle (S101) und der hülsenförmigen Drehwelle (AS101) in einer übertragungsfähigen Verbindungsbeziehung;
-- Wenn die steuerbare Bremsvorrichtung (BK102) so gesteuert wird, dass sie sich im Bremsverriegelungszustand befindet, die steuerbare Bremsvorrichtung (BK101) und die steuerbare Bremsvorrichtung (BK103) so gesteuert werden, dass sie sich im Freigabezustand befinden, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die hülsenförmige Drehwelle (AS101) aufgenommen werden;
-- Wenn die steuerbare Bremsvorrichtung (BK103) so gesteuert wird, dass sie sich im Bremsverriegelungszustand befindet und die steuerbare Bremsvorrichtung (BK101) und die steuerbare Bremsvorrichtung (BK102) so gesteuert werden, dass sie sich im Freigabezustand befinden und die elektrische Maschine (EM100) nicht als elektrische Maschinenfunktion betrieben wird, befindet sich die Übertragungsbeziehung zwischen der Drehwelle (S102) und der hülsenartigen Drehwelle (AS101) in einer Verbindungsbeziehung, die eine Übertragung ermöglicht;
-- Wenn die steuerbare Bremsvorrichtung (BK103) so gesteuert wird, dass sie sich im Bremsverriegelungszustand befindet, die steuerbare Bremsvorrichtung (BK101) und die steuerbare Bremsvorrichtung (BK102) so gesteuert werden, dass sie sich im Freigabezustand befinden und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S102) und die hülsenförmige Drehwelle (AS101) aufgenommen werden;
-- Wenn zwei oder alle der steuerbaren Bremsvorrichtung (BK101) und der steuerbaren Bremsvorrichtung (BK102) und der steuerbaren Bremsvorrichtung (BK103) so gesteuert werden, dass sie sich im Bremsverriegelungszustand befinden, befinden sich die Beziehungen zwischen der Drehachse (S101), der Drehachse (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

7. Elektrische Maschine umfassend ein steuerbares Planetengetriebe nach Anspruch 1, wobei der innere Drehteil der elektrischen Maschine (EM101) der elektrischen Maschine (EM100) mit dem Sonnenrad (W101) verbunden ist und mit der Drehwelle (S101) verbunden ist, um als Abtriebs-/Eingangsende zu dienen, wobei die Drehwelle (S102) mit dem durch das Planetenrad (W103) verbundenen Planetenträger (A101) verbunden ist, um als Abtriebs-/Eingangsteil zu dienen und das äußere ringförmige Rad (W102) mit dem äußeren Drehteil der elektrische Maschine (EM102) verbunden ist und mit der hülsenförmigen Drehwelle (AS101) als Abtriebs-/Eingangsseite verbunden ist, so dass ein Teil oder alle drei Abtriebs-/Eingangsenden jeweils mit einer Wirkseite einer entsprechenden steuerbaren Bremsvorrichtung verbunden sind und die andere Wirkseite der steuerbaren Bremsvorrichtung mit einem Gehäuse (H100) verbunden ist; durch Ansteuern der steuerbaren Bremsvorrichtung zum Verriegeln oder Freigeben der Bremse, die Vorgänge der Übertragungsfunktion des Verbindens der Übertragung oder Freigebens zwischen der Drehwelle (S101) am Abtriebs-/Eingangsende, der Drehwelle (S102) am Abtriebs-/Eingangsende und der hülsenartigen Drehwelle (AS101) am Abtriebs-/Eingangsende des Planetengetriebes (DG101) gesteuert werden können, und die interaktiven Vorgänge zwischen der elektrischen Maschine (EM100) und den Ausgangs-/Eingangsenden ebenfalls kontrolliert werden können.

8. Elektrische Maschine umfassend ein steuerbares Planetengetriebe nach Anspruch 7, wobei eine andere Wirkseite der steuerbaren Bremsvorrichtung (BK101) im Gehäuse (H100) befestigt ist, das Planetengetriebe (DG101) ebenfalls im Gehäuse (H100) befestigt ist, und der durch das Planetenrad (W103) des Planetengetriebes (DG101) verbundene Planetenträger (A101) zum Antreiben der als Abtriebs-/Eingangsseite dienenden Drehwelle (S102) vorgesehen ist, die im Wesentlichen besteht aus:
Die Vorgänge beinhalten eine oder mehr als eine der folgenden Funktionen:
-- Wenn die steuerbare Bremsvorrichtung (BK101) so gesteuert wird, dass sie sich im Freigabezustand befindet, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenartigen Drehwelle (AS101) im Freigabezustand, was eine Leerlaufdrehung ermöglicht;
-- Wenn die steuerbare Bremsvorrichtung (BK101) so gesteuert wird, dass sie sich im Freigabezustand befindet und die elektrische Maschine (EM100) als elektrische Maschinenfunktion betrieben wird, werden die entsprechenden interaktiven Vorgänge der Stromerzeugerfunktion oder des Motorfunktion zwischen dem inneren Drehteil der elektrischen Maschine (EM101) und dem äußeren Drehteil der elektrischen Maschine (EM102) entsprechend der Dämpfung der äußeren Last oder des Drehmoments, der Drehzahl und der Drehrichtung der von der Drehwelle (S101), der Drehwelle (S102) und der hülsenförmigen Drehwelle (AS101) aufgenommenen kinetischen Energie durchgeführt;
-- Wenn die steuerbare Bremsvorrichtung (BK101) so gesteuert wird, dass sie sich im Bremsverriegelungszustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer Verbindungsbeziehung, die eine Übertragung ermöglicht;
-- Wenn die steuerbare Bremsvorrichtung (BK101) so gesteuert wird, dass sie sich im Bremsverriegelungszustand befindet und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

9. Elektrische Maschine mit einem steuerbaren Planetengetriebe nach Anspruch 7, wobei eine andere Wirkseite der steuerbaren Bremsvorrichtung (BK101) in dem Gehäuse (H100) befestigt ist, wobei das Planetengetriebe (DG101) ebenfalls in dem Gehäuse (H100) befestigt ist, wobei der Planetenträger (A101) durch das Planetenrad (W103) des Planetengetriebes (DG101) verbunden ist, das zum Antreiben der Drehwelle (S102) vorgesehen ist, um als Abtriebs-/Eingangsende zu dienen, und die Drehwelle (S102) oder der Planetenträger (A101) mit einer Wirkseite einer steuerbaren Bremsvorrichtung (BK102) verbunden ist, während die andere Wirkseite der steuerbaren Bremsvorrichtung (BK102) im Gehäuse (H100) befestigt ist;
Die Vorgänge beinhalten eine oder mehr als eine der folgenden Funktionen:
-- Wenn die steuerbare Bremsvorrichtung (BK101) und die steuerbare Bremsvorrichtung (BK102) beide so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK102) beide so gesteuert werden, dass sie sich im Freigabezustand befinden, und die elektrische Maschine (EM100) als elektrische Maschinenfunktion betrieben wird, werden die entsprechenden interaktiven Vorgänge von der Stromgeneratorfunktion oder der Motorfunktion entsprechend zwischen dem inneren Drehteil der elektrischen Maschine (EM101) und dem äußeren Drehteil der elektrischen Maschine (EM102) gemäß der Dämpfung der äußeren Last oder des Drehmoments ausgeführt, wobei die Drehgeschwindigkeit und die Drehrichtung der von außen zugeführten kinetischen Rotationsenergie durch die Drehwelle (S101), die Drehwelle (S102) und die hülsenförmige Drehwelle (AS101) aufgenommen wird;
-- Wenn die steuerbare Bremsvorrichtung (BK101) so gesteuert wird, dass sie sich im Bremsverriegelungszustand befindet und die steuerbare Bremsvorrichtung (BK102) so gesteuert wird, dass sie sich im Freigabezustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer Verbindungsbeziehung, die eine Übertragung ermöglicht;
-- Wenn die steuerbare Bremsvorrichtung (BK101) so gesteuert wird, dass sie sich im Bremsverriegelungszustand befindet und die steuerbare Bremsvorrichtung (BK102) so gesteuert wird, dass sie sich im Freigabezustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
-- Wenn die steuerbare Bremsvorrichtung (BK101) so gesteuert wird, dass sie sich im Freigabezustand befindet und die steuerbare Bremsvorrichtung (BK102) so gesteuert wird, dass sie sich im Bremsverriegelungszustand befindet, und die elektrische Maschine (EM100) nicht als elektrische Maschinenfunktion betrieben wird, befindet sich die Übertragungsbeziehung zwischen der Drehwelle (S101) und der hülsenförmigen Drehwelle (AS101) in einer übertragungsfähigen Verbindungsbeziehung;
-- Wenn die steuerbare Bremsvorrichtung (BK101) so gesteuert wird, dass sie sich im Freigabezustand befindet und die steuerbare Bremsvorrichtung (BK102) so gesteuert wird, dass sie sich im Bremsverriegelungszustand befindet, und die elektrische Maschine (EM100) mit der elektrischen Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die hülsenförmige Drehwelle (AS101) aufgenommen werden;
-- Wenn die steuerbare Bremsvorrichtung (BK101) und die steuerbare Bremsvorrichtung (BK102) beide so gesteuert werden, dass sie sich im Bremsverriegelungszustand befinden, befinden sich die Beziehungen zwischen der Drehwelle (S101), der Drehwelle (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

10. Elektrische Maschine umfassend ein steuerbares Planetengetriebe nach Anspruch 7, wobei die Drehwelle (S101) zum Verbinden mit einer Wirkseite einer steuerbaren Bremsvorrichtung (BK103) vorgesehen ist, während die andere Wirkseite der steuerbaren Bremsvorrichtung (BK103) im Gehäuse (H100) befestigt ist, wobei eine weitere Wirkseite der steuerbaren Bremsvorrichtung (BK101) im Gehäuse (H100) befestigt ist, wobei der Mantel des Planetengetriebes (DG101) ebenfalls im Gehäuse (H100) befestigt ist, und das Planetenrad (W103) des Planetengetriebes (DG101) zum Verbinden des Planetenträgers (A101) und zum Betreiben der als Abtriebs-/Eingangsseite dienenden Drehwelle (S102) vorgesehen ist;
Die Vorgänge beinhalten eine oder mehr als eine der folgenden Funktionen:
-- Wenn die steuerbare Bremsvorrichtung (BK101) und die steuerbare Bremsvorrichtung (BK103) beide so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK103) beide so gesteuert werden, dass sie sich im Freigabezustand befinden, und die elektrische Maschine (EM100) als elektrische Maschinenfunktion betrieben wird, werden die entsprechenden interaktiven Vorgänge von der Stromgeneratorfunktion oder der Motorfunktion entsprechend zwischen dem inneren Drehteil der elektrischen Maschine (EM101) und dem äußeren Drehteil der elektrischen Maschine (EM102) gemäß der Dämpfung der äußeren Last oder des Drehmoments ausgeführt, wobei die Drehgeschwindigkeit und die Drehrichtung der von außen zugeführten kinetischen Rotationsenergie durch die Drehwelle (S101), die Drehwelle (S102) und die hülsenförmige Drehwelle (AS101) aufgenommen wird;
-- Wenn die steuerbare Bremsvorrichtung (BK101) so gesteuert wird, dass sie sich im Bremsverriegelungszustand befindet und die steuerbare Bremsvorrichtung (BK103) so gesteuert wird, dass sie sich im Freigabezustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer Verbindungsbeziehung, die eine Übertragung ermöglicht;
-- Wenn die steuerbare Bremsvorrichtung (BK101) so gesteuert wird, dass sie sich im Bremsverriegelungszustand befindet und die steuerbare Bremsvorrichtung (BK103) so gesteuert wird, dass sie sich im Freigabezustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
-- Wenn die steuerbare Bremsvorrichtung (BK101) so gesteuert wird, dass sie sich im Freigabezustand befindet und die steuerbare Bremsvorrichtung (BK103) so gesteuert wird, dass sie sich im Bremsverriegelungszustand befindet, und die elektrische Maschine (EM100) nicht als elektrische Maschinenfunktion betrieben wird, befindet sich die Übertragungsbeziehung zwischen der Drehwelle (S102) und der hülsenförmigen Drehwelle (AS101) in einer übertragungsfähigen Verbindungsbeziehung;
-- Wenn die steuerbare Bremsvorrichtung (BK101) so gesteuert wird, dass sie sich im Freigabezustand befindet und die steuerbare Bremsvorrichtung (BK103) so gesteuert wird, dass sie sich im Bremsverriegelungszustand befindet, und die elektrische Maschine (EM100) mit der elektrischen Maschinenfunktion betrieben wird, zwischen dem inneren Drehteil der elektrischen Maschine (EM101) und dem äußeren Drehteil der elektrischen Maschine (EM102) als Stromerzeugerfunktion oder Motorfunktion betrieben wird, um entsprechende interaktive Vorgänge mit der Dämpfung der äußeren Last oder der von außen zugeführten kinetischen Rotationsenergie, die von der Drehwelle (S102) und der hülsenförmigen Drehwelle (AS101) aufgenommen wird, durchzuführen;
-- Wenn die steuerbare Bremsvorrichtung (BK101) und die steuerbare Bremsvorrichtung (BK102) beide so gesteuert werden, dass sie sich im Bremsverriegelungszustand befinden, befinden sich die Beziehungen zwischen der Drehwelle (S101), der Drehwelle (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

11. Elektrische Maschine umfassend ein steuerbares Planetengetriebe nach Anspruch 7, wobei die Drehwelle (S101) zur Verbindung mit einer Wirkseite einer steuerbaren Bremsvorrichtung (BK103) vorgesehen ist, während die andere Wirkseite der steuerbaren Bremsvorrichtung (BK103) in dem Gehäuse (H100) befestigt ist, wobei eine andere Wirkseite der steuerbaren Bremsvorrichtung (BK101) in dem Gehäuse (H100) befestigt ist, wobei das Planetengetriebe (DG101) ebenfalls im Gehäuse (H100) befestigt, und das Planetenrad (W103) des Planetengetriebes (DG101) zum Verbinden des Planetenträgers (A101) und zum Antreiben Drehwelle (S102) vorgesehen ist, um als eine Abtriebs-/Eingangsseite zu dienen, und die Drehwelle (S102) oder der Planetenträger (A101) mit einer Wirkseite einer steuerbaren Bremsvorrichtung (BK102) verbunden ist und die andere Wirkseite der steuerbaren Bremsvorrichtung (BK102) im Gehäuse (H100) befestigt ist;
Die Vorgänge beinhalten eine oder mehr als eine der folgenden Funktionen:
-- Wenn die steuerbare Bremsvorrichtung (BK101) und die steuerbare Bremsvorrichtung (BK102) und die steuerbare Bremsvorrichtung (BK103) alle so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK102) und die steuerbare Bremsvorrichtung (BK103) alle so gesteuert werden, dass sie sich im Freigabezustand befinden, und die elektrische Maschine (EM100) als elektrische Maschinenfunktion betrieben wird, werden die entsprechenden interaktiven Vorgänge der Stromerzeugerfunktion oder der Motorfunktion entsprechend zwischen dem inneren Drehteil der elektrischen Maschine (EM101) und dem äußeren Drehteil der elektrischen Maschine (EM102), gemäß der Dämpfung der äußeren Last oder des Drehmoments, der Drehzahl und der Drehrichtung von der Drehwelle (S101), der Drehwelle (S102) und der hülsenförmigen Drehwelle (AS101) aufgenommenen kinetischen Energie, ausgeführt;
-- Wenn die steuerbare Bremsvorrichtung (BK101) und die steuerbare Bremsvorrichtung (BK102) und die steuerbare Bremsvorrichtung (BK103) so gesteuert werden, dass sie sich im Freigabezustand befinden, und die elektrische Maschine (EM100) nicht als elektrische Maschinenfunktion betrieben wird, befindet sich das Übertragungsverhältnis zwischen der Drehwelle (S101) und der Drehwelle (S102) in einer übertragungsfähigen Verbindungsbeziehung;
-- Wenn die steuerbare Bremsvorrichtung (BK101) so gesteuert wird, dass sie sich im Bremsverriegelungszustand befindet, und die steuerbare Bremsvorrichtung (BK102) und die steuerbare Bremsvorrichtung (BK103) so gesteuert werden, dass sie sich im Freigabezustand befinden, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
-- Wenn die steuerbare Bremsvorrichtung (BK103) so gesteuert wird, dass sie sich im Bremsverriegelungszustand befindet, die steuerbare Bremsvorrichtung (BK101) und die steuerbare Bremsvorrichtung (BK102) so gesteuert wird, dass sie sich im Freigabezustand befinden, und die elektrische Maschine (EM100) nicht als elektrische Maschinenfunktion betrieben wird, befindet sich das Übersetzungsverhältnis zwischen der Drehwelle (S101) und der hülsenförmigen Drehwelle (AS101) in einer übertragungsfähigen Verbindungsbeziehung;
-- Wenn die steuerbare Bremsvorrichtung (BK103) so gesteuert wird, dass sie sich im Bremsverriegelungszustand befindet, die steuerbare Bremsvorrichtung (BK101) und die steuerbare Bremsvorrichtung (BK102) so gesteuert werden, dass sie sich im Freigabezustand befinden, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die hülsenförmige Drehwelle (AS101) aufgenommen werden;
-- Wenn zwei oder alle der steuerbaren Bremsvorrichtung (BK101) und der steuerbaren Bremsvorrichtung (BK102) und der steuerbaren Bremsvorrichtung (BK103) so gesteuert werden, dass sie sich im Bremsverriegelungszustand befinden, befinden sich die Beziehungen zwischen der Drehachse (S101), der Drehachse (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

12. Elektrische Maschine, umfassend ein steuerbares Planetengetriebe nach Anspruch 1, wobei der innere Drehteil der elektrischen Maschine (EM101) der elektrischen Maschine (EM100) mit dem Planetenrad (W103) des Planetengetriebes (DG101) und dem Planetenträger (A101) verbunden ist, um gemeinsam auf einer Drehwelle (S102) verbunden zu sein, um als Abtriebs-/Eingangsende zu dienen, und das Sonnenrad (W101), das mit der Drehwelle (S101) verbunden ist, dient als Abtriebs-/Eingangsende, und das äußere ringförmige Rad (W102) des Planetengetriebes (DG101) in Verbindung mit einem äußeren Drehteil einer elektrischen Maschine (EM102) und einer hülsenförmigen Drehwelle (AS101) dient als Abtriebs-/Eingangsende, sodass ein Teil oder alle drei Abtriebs-/Eingangsenden jeweils mit einer Wirkseite einer entsprechenden steuerbaren Bremsvorrichtung verbunden sind, und die andere Wirkseite der steuerbaren Bremsvorrichtung mit einem Gehäuse (H100) verbunden ist; wobei durch Steuern der steuerbaren Bremsvorrichtung zum Ausführen des Verriegelns oder Freigebens der Bremse, die Vorgänge der Übertragungsfunktion des Verbindens der Übertragung oder Freigebens zwischen der Drehwelle (S101) am Abtriebs-/Eingangsende, der Drehwelle (S102) am Abtriebs-/Eingangsende und der hülsenförmigen Drehwelle (AS101) am Abtriebs-/Eingangsende des Planetentriebes (DG101) gesteuert werden können, und die interaktiven Vorgänge zwischen der elektrischen Maschine (EM100) und den Abtriebs-/Eingangsenden ebenfalls gesteuert werden können.

13. Elektrische Maschine, umfassend ein steuerbares Planetengetriebe nach Anspruch 12, wobei eine andere Wirkseite der steuerbaren Bremsvorrichtung (BK101) im Gehäuse (H100) befestigt ist, und das Planetengetriebe (DG101) ebenfalls im Gehäuse (H100) befestigt ist;
Die Vorgänge beinhalten eine oder mehr als eine der folgenden Funktionen:
-- Wenn die steuerbare Bremsvorrichtung (BK101) so gesteuert wird, dass sie sich im Freigabezustand befindet, und die elektrische Maschine (EM100) nicht als die elektrische Maschinenfunktion betrieben wird, befinden sich die Übertragungsbeziehungen zwischen der Drehwelle (S101) und der Drehwelle (S102) und der hülsenartigen Drehwelle (AS101) im Freigabezustand, was eine Leerlaufdrehung ermöglicht;
-- Wenn die steuerbare Bremsvorrichtung (BK101) in den Freigabezustand versetzt wird, und die elektrische Maschine (EM100) als elektrische Maschinenfunktion betrieben wird, werden die entsprechenden interaktiven Vorgänge der Stromerzeugerfunktion oder der Motorfunktion entsprechend zwischen dem inneren Drehteil der elektrischen Maschine (EM101) und dem äußeren Drehteil der elektrischen Maschine (EM102) gemäß der Dämpfung der äußeren Belastung oder des Drehmoments ausgeführt, wobei die Drehgeschwindigkeit und die Drehrichtung der von außen zugeführten kinetischen Rotationsenergie durch die Drehwelle (S101), die Drehwelle (S102) und die hülsenförmige Drehwelle (AS101) aufgenommen wird;
-- Wenn die steuerbare Bremsvorrichtung (BK101) so gesteuert wird, dass sie sich im Bremsverriegelungszustand befindet, und die elektrische Maschine (EM100) nicht als elektrische Maschinenfunktion betrieben wird, befindet sich das Übersetzungsverhältnis zwischen der Drehwelle (S101) und der Drehwelle (S102) in einer Verbindungsbeziehung, die eine Übertragung ermöglicht;
-- Wenn die steuerbare Bremsvorrichtung (BK101) so gesteuert wird, dass sie sich im Bremsverriegelungszustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101), die Drehwelle (S102) und die hülsenförmige Drehwelle (AS101) aufgenommen werden;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

14. Elektrische Maschine, umfassend ein steuerbares Planetengetriebe nach Anspruch 12, wobei eine andere Wirkseite der steuerbaren Bremsvorrichtung (BK101) in dem Gehäuse (H100) befestigt ist, wobei das Planetengetriebe (DG101) ebenfalls im Gehäuse (H100) befestigt ist, und die Drehwelle (S102) mit einer Wirkseite einer steuerbaren Bremsvorrichtung (BK102) verbunden ist, während die andere Wirkseite der steuerbaren Bremsvorrichtung (BK102) im Gehäuse (H100) befestigt ist;
Die Vorgänge beinhalten eine oder mehr als eine der folgenden Funktionen:
-- Wenn die steuerbare Bremsvorrichtung (BK101) und die steuerbare Bremsvorrichtung (BK102) beide so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK102) beide so gesteuert werden, dass sie sich im Freigabezustand befinden, und die elektrische Maschine (EM100) als elektrische Maschinenfunktion betrieben wird, werden die entsprechenden interaktiven Vorgänge von der Stromgeneratorfunktion oder der Motorfunktion entsprechend zwischen dem inneren Drehteil der elektrischen Maschine (EM101) und dem äußeren Drehteil der elektrischen Maschine (EM102) gemäß der Dämpfung der äußeren Last oder des Drehmoments ausgeführt, wobei die Drehgeschwindigkeit und die Drehrichtung der von außen zugeführten kinetischen Rotationsenergie durch die Drehwelle (S101), die Drehwelle (S102) und die hülsenförmige Drehwelle (AS101) aufgenommen wird;
-- Wenn die steuerbare Bremsvorrichtung (BK101) so gesteuert wird, dass sie sich im Bremsverriegelungszustand befindet und die steuerbare Bremsvorrichtung (BK102) so gesteuert wird, dass sie sich im Freigabezustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer Verbindungsbeziehung, die eine Übertragung ermöglicht;
-- Wenn die steuerbare Bremsvorrichtung (BK101) so gesteuert wird, dass sie sich im Bremsverriegelungszustand befindet und die steuerbare Bremsvorrichtung (BK102) so gesteuert wird, dass sie sich im Freigabezustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
-- Wenn die steuerbare Bremsvorrichtung (BK101) so gesteuert wird, dass sie sich im Freigabezustand befindet und die steuerbare Bremsvorrichtung (BK102) so gesteuert wird, dass sie sich im Bremsverriegelungszustand befindet, und die elektrische Maschine (EM100) nicht als elektrische Maschinenfunktion betrieben wird, befindet sich das Übersetzungsverhältnis zwischen der Drehwelle (S101) und der hülsenförmigen Drehwelle (AS101) in einer Verbindungsbeziehung, die eine Übertragung ermöglicht;
-- Wenn die steuerbare Bremsvorrichtung (BK101) so gesteuert wird, dass sie sich im Freigabezustand befindet und die steuerbare Bremsvorrichtung (BK102) so gesteuert wird, dass sie sich im Bremsverriegelungszustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die hülsenförmige Drehwelle (AS101) aufgenommen werden;
-- Wenn die steuerbare Bremsvorrichtung (BK101) und die steuerbare Bremsvorrichtung (BK102) beide so gesteuert werden, dass sie sich im Zustand der Bremsverriegelung befinden, sind die Beziehungen zwischen der Drehwelle (S101), der Drehwelle (S102) und der hülsenartigen Drehwelle (AS101) alle im Zustand der Bremsenverriegelung;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

15. Elektrische Maschine, umfassend ein steuerbares Planetengetriebe, wie in Anspruch 12 beansprucht, wobei die Drehwelle (S101) mit einer Wirkseite einer steuerbaren Bremsvorrichtung (BK103) verbunden ist, während die andere Wirkseite der steuerbaren Bremsvorrichtung (BK103) im Gehäuse (H100) befestigt ist, wobei eine andere Wirkseite der steuerbaren Bremsvorrichtung (BK101) im Gehäuse (H100) befestigt ist, wobei das Planetengetriebe (DG101) ebenfalls im Gehäuse (H100) befestigt ist, und das Planetenrad (W103) des Planetengetriebes (DG101) zum Verbinden mit dem Planetenträger (A101) und dem inneren Drehteil der elektrischen Maschine (EM101) vorgesehen ist und mit der Drehwelle (S102) verbunden ist, um als Abtriebs-/Eingangsseite zu dienen;
Die Vorgänge beinhalten eine oder mehr als eine der folgenden Funktionen:
-- Wenn die steuerbare Bremsvorrichtung (BK101) und die steuerbare Bremsvorrichtung (BK103) beide so gesteuert werden, dass sie sich im Freigabezustand befinden und die elektrische Maschine (EM100) nicht als elektrische Maschinenfunktion betrieben wird, befindet sich die Übertragungsbeziehungen zwischen der Drehwelle (S101) und der Drehwelle (S102) und der hülsenartigen Drehwelle (AS101) befinden sich im Freigabezustand und erlauben eine Leerlaufdrehung;
-- Wenn die steuerbare Bremsvorrichtung (BK101) und die steuerbare Bremsvorrichtung (BK103) beide so gesteuert werden, dass sie sich im Freigabezustand befinden, und die elektrische Maschine (EM100) wird als elektrische Maschinenfunktion betrieben, der entsprechende interaktive Betrieb der Stromerzeugerfunktion oder der Motorfunktion wird entsprechend zwischen dem inneren Drehteil der elektrischen Maschine (EM101) und dem äußeren Drehteil der elektrische Maschine (EM102) durchgeführt wird, gemäß der Dämpfung der äußeren Last oder der Drehbewegung, Drehmoment, die Drehzahl und die Drehrichtung der von außen zugeführten kinetischen Energie der Drehwelle (S101), der Drehwelle (S102) und der hülsenförmigen Drehwelle (AS101);
-- Wenn die steuerbare Bremsvorrichtung (BK101) so gesteuert wird, dass sie sich im Zustand der Bremsverriegelung befindet und die steuerbare Bremsvorrichtung (BK103) so gesteuert wird, dass sie sich im Freigabezustand befindet, und die elektrische Maschine (EM100) nicht als elektrische Maschinenfunktion betrieben wird, befindet sich die Übertragungsbeziehung zwischen der Drehwelle (S101) und der Drehwelle (S102) in einer die Übertragung ermöglichenden Verbindungsbeziehung;
-- Wenn die steuerbare Bremsvorrichtung (BK101) so gesteuert wird, dass sie sich im Zustand der Bremsverriegelung befindet und die steuerbare Bremsvorrichtung (BK103) so gesteuert wird, dass sie sich im Freigabezustand befindet, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
-- Wenn die steuerbare Bremsvorrichtung (BK101) so gesteuert wird, dass sie sich im Freigabezustand befindet und die steuerbare Bremsvorrichtung (BK103) so gesteuert wird, dass sie sich im Bremsverriegelungszustand befindet, und die elektrische Maschine (EM100) nicht als elektrische Maschinenfunktion betrieben wird, befindet sich die Übertragungsbeziehung zwischen der Drehwelle (S102) und der hülsenförmigen Drehwelle (AS101) in einer übertragungsfähigen Verbindungsbeziehung;
-- Wenn die steuerbare Bremsvorrichtung (BK101) so gesteuert wird, dass sie sich im Freigabezustand befindet und die steuerbare Bremsvorrichtung (BK103) so gesteuert wird, dass sie sich im Bremsverriegelungszustand befindet, und die elektrische Maschine (EM100) mit der elektrischen Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S102) und die hülsenförmige Drehwelle (AS101) aufgenommen werden;
-- Wenn die steuerbare Bremsvorrichtung (BK101) und die steuerbare Bremsvorrichtung (BK102) beide so gesteuert werden, dass sie sich im Bremsverriegelungszustand befinden, befinden sich die Beziehungen zwischen der Drehwelle (S101), der Drehwelle (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

16. Elektrische Maschine mit einem steuerbaren Planetengetriebe, wie in Anspruch 12 beansprucht, wobei die Drehwelle (S101) mit einer Wirkseite einer steuerbaren Bremsvorrichtung (BK103) verbunden ist, während die andere Wirkseite der steuerbaren Bremsvorrichtung (BK103) im Gehäuse (H100) befestigt ist, wobei eine andere Wirkseite der steuerbaren Bremsvorrichtung (BK101) im Gehäuse (H100) befestigt ist, wobei das Planetengetriebe (DG101) ebenfalls im Gehäuse (H100) befestigt ist, wobei das Planetenrad (S103) des Planetengetriebes (DG101) zum Verbinden des Planetenträgers (A101) und des inneren Drehteils der elektrischen Maschine (EM101) und zum Verbinden mit der Drehwelle (S102), die als Abtriebs-/Eingangsseite dient, vorgesehen ist, und die Drehwelle (S102) mit einer Wirkseite einer steuerbaren Bremsvorrichtung (BK102) verbunden ist, während die andere Wirkseite der steuerbaren Bremsvorrichtung (BK102) in dem Gehäuse (H100) befestigt ist, das im Wesentlichen besteht aus:
Die Vorgänge beinhalten eine oder mehr als eine der folgenden Funktionen:
-- Wenn die steuerbare Bremsvorrichtung (BK101) und die steuerbare Bremsvorrichtung (BK102) und die steuerbare Bremsvorrichtung (BK103) alle so gesteuert werden, dass sie sich im Freigabezustand befinden, und die elektrische Maschine (EM100) nicht als elektrische Maschinenfunktion betrieben wird, befinden sich die Übertragungsbeziehungen zwischen der Drehwelle (S101) und der Drehwelle (S102) und der hülsenförmigen Drehwelle (AS101) im Freigabezustand, was eine Leerlaufdrehung ermöglicht;
-- Wenn die steuerbare Bremsvorrichtung (BK101) und die steuerbare Bremsvorrichtung (BK102) und die steuerbare Bremsvorrichtung (BK103) alle so gesteuert werden, dass sie sich im Freigabezustand befinden, und die elektrische Maschine (EM100) als elektrische Maschinenfunktion betrieben wird, werden die entsprechenden interaktiven Vorgänge der Stromerzeugerfunktion oder der Motorfunktion entsprechend zwischen dem inneren Drehteil von elektrischen Maschine (EM101) und dem äußeren Drehteil der elektrischen Maschine (EM102), gemäß der Dämpfung der äußeren Last oder des Drehmoments, der Drehzahl und der Drehrichtung der von der Drehwelle (S101), der Drehwelle (S102) und der hülsenförmigen Drehwelle (AS101) aufgenommenen kinetischen Energie;
-- Wenn die steuerbare Bremsvorrichtung (BK101) und die steuerbare Bremsvorrichtung (BK102) und die steuerbare Bremsvorrichtung (BK103) so gesteuert werden, dass sie sich im Freigabezustand befinden, und die elektrische Maschine (EM100) nicht als elektrische Maschinenfunktion betrieben wird, befindet sich das Übertragungsverhältnis zwischen der Drehwelle (S101) und der Drehwelle (S102) in einer übertragungsfähigen Verbindungsbeziehung;
-- Wenn die steuerbare Bremsvorrichtung (BK101) so gesteuert wird, dass sie sich im Bremsverriegelungszustand befindet, und die steuerbare Bremsvorrichtung (BK102) und die steuerbare Bremsvorrichtung (BK103) so gesteuert werden, dass sie sich im Freigabezustand befinden, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die Drehwelle (S102) aufgenommen werden;
-- Wenn die steuerbare Bremsvorrichtung (BK102) so gesteuert wird, dass sie sich im Bremsverriegelungszustand befindet, die steuerbare Bremsvorrichtung (BK101) und die steuerbare Bremsvorrichtung (BK103) so gesteuert wird, dass sie sich im Freigabezustand befinden, und die elektrische Maschine (EM100) nicht als elektrische Maschinenfunktion betrieben wird, befindet sich das Übersetzungsverhältnis zwischen der Drehwelle (S101) und der hülsenförmigen Drehwelle (AS101) in einer übertragungsfähigen Verbindungsbeziehung;
-- Wenn die steuerbare Bremsvorrichtung (BK102) so gesteuert wird, dass sie sich im Bremsverriegelungszustand befindet, die steuerbare Bremsvorrichtung (BK101) und die steuerbare Bremsvorrichtung (BK103) so gesteuert werden, dass sie sich im Freigabezustand befinden, und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S101) und die hülsenförmige Drehwelle (AS101) aufgenommen werden;
-- Wenn die steuerbare Bremsvorrichtung (BK103) so gesteuert wird, dass sie sich im Bremsverriegelungszustand befindet und die steuerbare Bremsvorrichtung (BK101) und die steuerbare Bremsvorrichtung (BK102) so gesteuert werden, dass sie sich im Freigabezustand befinden und die elektrische Maschine (EM100) nicht als elektrische Maschinenfunktion betrieben wird, befindet sich die Übertragungsbeziehung zwischen der Drehwelle (S102) und der hülsenartigen Drehwelle (AS101) in einer Verbindungsbeziehung, die eine Übertragung ermöglicht;
-- Wenn die steuerbare Bremsvorrichtung (BK103) so gesteuert wird, dass sie sich im Bremsverriegelungszustand befindet, die steuerbare Bremsvorrichtung (BK101) und die steuerbare Bremsvorrichtung (BK102) so gesteuert werden, dass sie sich im Freigabezustand befinden und die elektrische Maschine (EM100) als elektrische Maschinenfunktion betrieben wird, erfolgt zwischen dem inneren Drehteil der elektrischen Maschine (EM101) und dem äußeren Drehteil der elektrischen Maschine (EM102) der Betrieb in Funktion als der Stromerzeuger oder in Funktion als Motor, um entsprechende interaktive Vorgänge mit der Dämpfung von externer Last oder der von außen zugeführten kinetische Energie auszuführen, die durch die Drehwelle (S102) und die hülsenförmige Drehwelle (AS101) aufgenommen werden;
-- Wenn zwei oder alle der steuerbaren Bremsvorrichtung (BK101) und der steuerbaren Bremsvorrichtung (BK102) und der steuerbaren Bremsvorrichtung (BK103) so gesteuert werden, dass sie sich im Bremsverriegelungszustand befinden, befinden sich die Beziehungen zwischen der Drehachse (S101), der Drehachse (S102) und der hülsenförmigen Drehwelle (AS101) alle im Bremsverriegelungszustand;
Die interaktiven Vorgänge der entsprechenden Funktion, die durch die genannte elektrischen Maschine (EM100) ausgeführt werden, beinhalten das Freigeben der Antriebssteuerung von extern zugeführter elektrischer Energie, um als Motorfunktion für den individuellen Antrieb der Last zu fungieren, oder das Arbeiten mit der extern zugeführten kinetischen Rotationsenergie für den gemeinsamen Antrieb der Last;
Die interaktiven Vorgänge der entsprechenden Funktion, die von der genannten elektrischen Maschine (EM100) ausgeführt werden, beinhalten das Freigeben des Antriebs der extern zugeführten kinetischen Rotationsenergie oder das Antreiben der kinetischen Schwungmasseenergie der Last, um als Stromerzeugerfunktion betrieben zu werden, um so die elektrische Energie zum Antreiben der externen elektrischen Last oder zum Laden der externen elektrischen Energiespeichervorrichtung auszugeben.

## Revendications

1. Machine électrique associée à un train d'engrenages planétaires commandable (DG101), dans laquelle une partie de rotation intérieure (EM101) de la machine électrique et une partie de rotation extérieure (EM102) de la machine électrique (EM-100) sont respectivement combinés avec deux des trois extrémités de sortie/entrée du train d'engrenages planétaires, qui comprend une roue solaire (W101), une roue annulaire extérieure (W102) et un porte-satellites (A101) qui porte une roue planétaire (W103) du train d'engrenages planétaires (DG101) pour effectuer une transmission, et l'une des trois extrémités de sortie/entrée non connectée à la machine électrique joue le rôle de sortie externe, et une ou plusieurs des trois extrémités de sortie/entrée sont connectées à un côté action d'un dispositif de freinage commandable (BK101), et l'autre côté action du dispositif de freinage commandable est connecté à un boîtier (H100) ; en contrôlant le dispositif de freinage commandable, les opérations fonctionnelles de transmission entre un premier arbre de rotation (S101) à l'extrémité de sortie/entrée, un second arbre de rotation (S102) à l'extrémité de sortie/entrée et un arbre de rotation du type manchon (AS-101), qui tourne et qui est gainé sur le premier arbre de rotation (S101) à l'extrémité de sortie/entrée du train d'engrenages planétaires (DG101) peuvent être commandées, et les opérations interactives entre la machine électrique (EM100) et les extrémités de sortie/entrée peuvent être aussi commandées, dans laquelle au moins l'arbre de rotation de type manchon (AS101) est connecté à un côté action du dispositif de freinage commandable (BK101).

2. Machine électrique comprenant un train d'engrenages planétaires commandable selon la revendication 1, dans laquelle la partie de rotation intérieure de la machine électrique (EM101) de la machine électrique (EM100) est combinée avec la roue solaire (W101) et combinée à l'arbre de rotation (S101) et joue le rôle d'extrémité de sortie/entrée, l'arbre de rotation (S102) est combiné à la roue annulaire extérieure (W102) pour jouer le rôle d'extrémité de sortie/entrée, et le porte-satellites (A101) est relié à la roue planétaire (W103) du train d'engrenages planétaires (DG101) combiné avec la partie de rotation extérieure de la machine électrique (EM102) et est combiné avec l'arbre de rotation de type de manchon (AS101) pour jouer le rôle d'extrémité de sortie/entrée.

3. Machine électrique comprenant un train d'engrenages planétaires commandable selon la revendication 2, dans laquelle un autre côté action du dispositif de freinage commandable (BK101) est fixé dans le boîtier (H100), le train d'engrenages planétaires (DG101) est également fixé dans le boîtier (H100), et la roue annulaire extérieure (W102) est fournie pour entraîner l'arbre de rotation (S102) pour jouer le rôle d'extrémité de sortie/entrée, qui est constituée principalement de :
-- Un train d'engrenages planétaires (DG101) : comprenant des engrenages de transmission en prise les uns avec les autres, ou des roues de frottement de transmission effectuant mutuellement des transmissions par frottement pour former une fonction de train d'engrenages planétaires, et comprenant un palier, et est également installé avec une coquille pour être combinée dans le boîtier (H100) ;
-- Un porte-satellites (A101) : ayant une extrémité fournie pour permettre à la roue planétaire (W103) de tourner et de se lier, et l'autre extrémité s'étendant axialement vers l'arbre de rotation (S101) pour être combinée à la partie de rotation extérieure de la machine électrique (EM102) et combinée avec l'arbre de rotation de type manchon (AS101), et l'arbre de rotation de type manchon (AS101) est gainé sur un ou les deux de l'arbre de rotation (S101) et de l'arbre de rotation (S102) et est capable de tourner sur ceux-ci ;
-- Un dispositif de freinage commandable (BK101) : qui est constitué par un dispositif de freinage commandé par une force manuelle ou une force mécanique ou une force hydraulique ou une force pneumatique ou une force électromagnétique, et ayant deux côtés action pouvant être commandés pour les opérations d'un état de blocage des freins pour un engagement ou d'un état de libération pour une séparation, dans lequel l'autre côté action est fixé dans le boîtier (H100) ;
-- Une machine électrique (EM100) : constituée par un machine électrique en courant continu ou alternatif, avec ou sans brosse, synchrone ou non synchrone, ayant une partie de rotation intérieure (EM101) et une partie de rotation extérieure (EM102), et installée avec des couvertures d'extrémité, des paliers et des dispositifs de conduction électriques apparentés utilisés pour introduire de l'énergie électrique, la partie de rotation intérieure (EM101) et la partie de rotation extérieure (EM102) sont mises en rotation coaxiale, où la partie de rotation intérieure (EM101) est associée à l'arbre de rotation (S101), et la partie de rotation extérieure (EM102) est combinée avec le porte-satellites (A101) ;
Les opérations englobent une ou plusieurs des fonctions suivantes :
--Lorsque le dispositif de freinage commandable (BK101) est commandé pour être dans l'état de libération, et que la machine électrique (EM100) n'est pas utilisée pas comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) est commandé pour être dans l'état de libération, et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et de la direction de rotation de l'énergie cinétique rotative entrée de l'extérieur soutenus par l'arbre de rotation (S101), l'arbre de rotation (S102) et l'arbre de rotation du type à manchon (AS101) ;
-- Lorsque le dispositif de freinage commandable (BK101) est commandé pour être dans l'état de blocage des freins, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives en fonction de l'amortissement de la charge externe ou de l'énergie cinétique rotative entrée de l'extérieur soutenus par l'arbre de rotation (S101) et l'arbre de rotation (S102) ;
Les opérations interactives de la fonction correspondante effectuées par la machine électrique mentionnée (EM100) comprennent la réception de la commande d'entraînement de l'énergie électrique entrée de l'extérieur pour fonctionner en tant que fonction de moteur pour entraîner individuellement la charge, ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique externe ou pour charger le dispositif de stockage d'énergie électrique externe.

4. Machine électrique comprenant un train d'engrenages planétaires commandable selon la revendication 2, dans laquelle un autre côté action du dispositif de freinage commandable (BK101) est fixé dans le boîtier (H100), le train d'engrenages planétaires (DG101) est également fixé dans le boîtier (H100), la roue annulaire extérieure (W102) est fournie pour entraîner l'arbre de rotation (S102) pour jouer le rôle d'extrémité de sortie/entrée, et l'arbre de rotation (S102) est connecté à un côté action d'un dispositif de freinage commandable (BK102) alors que l'autre côté action du dispositif de freinage commandable (BK102) est fixé dans le boîtier (H100), qui est principalement constitué de :
-- Un dispositif de freinage commandable (BK102) : qui est constitué par un dispositif de freinage commandé par une force manuelle ou une force mécanique ou une force hydraulique ou une force pneumatique ou une force électromagnétique, et ayant deux côtés action pouvant être commandés pour les opérations d'un état de blocage des freins pour un engagement ou d'un état de libération pour une séparation, où l'un des côtés action est connecté à l'arbre de rotation (S102), et l'autre côté action est fixé dans le boîtier (H100) ;
Les opérations englobent une ou plusieurs des fonctions suivantes :
-- Lorsque le dispositif de freinage commandable (BK101) et le dispositif de freinage commandable (BK102) sont tous deux commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK102) sont tous deux commandés pour être dans l'état de libération et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et de la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage contrôlable (BK101) est commandé pour être dans l'état de blocage des freins et que le dispositif de freinage commandable (BK102) est commandé pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins et que le dispositif de freinage commandable (BK102) est commandé pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives correspondantes en fonction de l'amortissement de la charge externe ou de l'énergie cinétique rotative entrée de l'extérieur soutenus par l'arbre de rotation (S101) et l'arbre de rotation (S102) ;
-- Lorsque le dispositif de freinage commandable (BK101) est commandé pour être dans l'état de libération et que le dispositif de freinage commandable (BK102) est commandé pour être dans l'état de blocage des freins, et que la machine électrique (EM100) n'est pas utilisée comme fonction de machine électrique, la relation de transmission entre l'arbre de rotation (S101) et l'arbre de rotation de type manchon (AS101) est dans une relation de connexion permettant une transmission ;
-- Lorsque le dispositif de freinage commandable (BK101) est commandé pour être dans l'état de libération et que le dispositif de freinage commandable (BK102) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation de type manchon (AS101) ;
-- Lorsque le dispositif de freinage commandable (BK101) et le dispositif de freinage commandable (BK102) sont tous deux commandés pour être dans l'état de blocage des freins, les relations entre l'arbre de rotation (S101), l'arbre de rotation (S102) et l'arbre de rotation de type de manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge ou pour travailler avec l'énergie cinétique rotative entrée de l'extérieur pour entrainer communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique de d'inertie de la charge pour être utilisée comme fonction de générateur d'énergie, de manière à produire de l'énergie électrique pour entraîner la charge électrique externe ou pour charger le dispositif de stockage d'énergie électrique externe.

5. Machine électrique comprenant un train d'engrenages planétaires commandable selon la revendication 2, dans laquelle l'arbre de rotation (S101) joue le rôle d'extrémité d'entrée/sortie et est fourni pour connecter un côté action d'un dispositif de freinage commandable (BK103) alors que l'autre côté action du dispositif de freinage commandable (BK103) est fixé dans le boîtier (H100), un autre côté action du dispositif de freinage commandable (BK101) est fixé dans le boîtier (H100), le train d'engrenages planétaires (DG101) est également fixé dans le boîtier (H100) et la roue annulaire extérieure (W102) du train d'engrenages planétaires (DG101) est fournie pour entraîner l'arbre de rotation (S102) pour jouer le rôle d'extrémité de sortie/entrée, qui est constituée principalement de :
-- Un dispositif de freinage commandable (BK103) : qui est constitué par un dispositif de freinage commandé par une force manuelle ou une force mécanique ou une force hydraulique ou une force pneumatique ou une force électromagnétique, et ayant deux côtés action contrôlables pour les opérations d'un état de blocage des freins pour un engagement ou d'un état de libération pour une séparation, où l'un des côtés action est connecté à l'arbre de rotation (S101) et l'autre côté action est fixé dans le boîtier (H100) ;
Les opérations englobent une ou plusieurs des fonctions suivantes :
-- Lorsque le dispositif de freinage commandable (BK101) et le dispositif de freinage commandable (BK103) sont tous deux commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK103) sont tous deux commandés pour être dans l'état de libération, et que la machine électrique (EM100) est utilisée comme fonction de machine électrique, l'opération interactive correspondante de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est commandé pour être dans l'état de blocage des freins, et que le dispositif de freinage commandable (BK103) est commandé pour être dans l'état de libération, et que la machine électrique (EM100) n'est pas utilisée comme fonction de machine électrique, la relation de transmission entre l'arbre de rotation (S101) et l'arbre de rotation de type manchon (S102) est dans une relation de connexion permettant une transmission ;
-- Lorsque le dispositif de freinage commandable (BK101) est commandé pour être dans l'état de blocage des freins, et que le dispositif de freinage commandable (BK103) est commandé pour être dans l'état de libération, et que la machine électrique (EM100) est utilisée comme la fonction de machine électrique, entre la partie de rotation intérieure de la machine électrique (EM101) et la partie de rotation extérieure de la machine électrique (EM102) est utilisée comme fonction de générateur d'énergie ou comme fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation de type manchon (S102) ;
-- Lorsque le dispositif de freinage commandable (BK101) est commandé pour être dans l'état de libération et que le dispositif de freinage commandable (BK103) est commandé pour être dans l'état de blocage des freins, et que la machine électrique (EM100) n'est pas utilisée comme fonction de machine électrique, la relation de transmission entre l'arbre de rotation (S102) et l'arbre de rotation de type manchon (AS101) est dans une relation de connexion permettant une transmission ;
-- Lorsque le dispositif de freinage commandable (BK101) est commandé pour être dans l'état de libération et que le dispositif de freinage commandable (BK103) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives correspondantes avec l'amortissement de la charge externe ou de l'énergie cinétique rotative entrée de l'extérieur soutenus par l'arbre de rotation (S102) et l'arbre de rotation de type manchon (AS101) ;
-- Lorsque le dispositif de freinage commandable (BK101) et le dispositif de freinage commandable (BK102) sont tous deux commandés pour être dans l'état de blocage des freins, les relations entre l'arbre de rotation (S101), l'arbre de rotation (S102) et l'arbre de rotation de type manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour fonctionner en tant que fonction de moteur pour entraîner individuellement la charge, ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique externe ou pour charger le dispositif de stockage d'énergie électrique externe.

6. Machine électrique comprenant un train d'engrenages planétaires commandable selon la revendication 2, dans laquelle l'arbre de rotation (S101) joue le rôle d'extrémité de sortie/entrée et est fourni pour connecter un côté action d'un dispositif de freinage commandable (BK103) alors que l'autre côté action du dispositif de freinage commandable (BK103) est fixé dans le boîtier (H100), et l'arbre de rotation (S102) est connecté à un côté action d'un dispositif de frein commandable (BK102) alors que l'autre côté action du dispositif de freinage commandable (BK102) est fixé dans le boîtier (H100) ;
Les opérations englobent une ou plusieurs des fonctions suivantes :
-- Lorsque le dispositif de freinage commandable (BK101) et le dispositif de freinage commandable (BK102) et le dispositif de freinage commandable (BK103) sont tous commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK102) et le dispositif de freinage commandable (BK103) sont tous commandés pour être dans l'état de libération et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et de la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est commandé pour être dans l'état de blocage des freins, que le dispositif de freinage commandable (BK102) et le dispositif de freinage commandable (BK103) sont commandés pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, que le dispositif de freinage commandable (BK102) et le dispositif de freinage commandable (BK103) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation (S102) ;
-- Lorsque le dispositif de freinage commandable (BK102) est commandé pour être dans l'état de blocage des freins, que le dispositif de freinage commandable (BK101) et le dispositif de freinage commandable (BK103) sont commandés pour être dans l'état de libération, et que la machine électrique (EM100) n'est pas utilisée comme fonction de machine électrique, la relation de transmission entre l'arbre de rotation (S101) et l'arbre de rotation de type manchon (AS101) est dans une relation de connexion permettant une transmission ;
-- Lorsque le dispositif de freinage commandable (BK102) est commandé pour être dans l'état de blocage des freins, que le dispositif de freinage commandable (BK101) et le dispositif de freinage commandable (BK103) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation du type à manchon (AS101) ;
-- Lorsque le dispositif de freinage commandable (BK103) est commandé pour être dans l'état de blocage des freins, le dispositif de freinage commandable (BK101) et le dispositif de freinage commandable (BK102) sont commandés pour être dans l'état de libération, et que la machine électrique (EM100) n'est pas utilisée comme fonction de machine électrique, la relation de transmission entre l'arbre de rotation (S102) et l'arbre de rotation de type manchon (AS101) est dans une relation de connexion permettant une transmission ;
-- Lorsque le dispositif de freinage commandable (BK103) est commandé pour être dans l'état de blocage des freins, que le dispositif de freinage commandable (BK101) et le dispositif de freinage commandable (BK102) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur, pour effectuer des opérations interactives correspondantes avec l'amortissement de la charge externe ou de l'énergie cinétique rotative entrée de l'extérieur soutenus par l'arbre de rotation (S102) et l'arbre de rotation du type manchon (AS101) ;
-- Lorsque deux ou la totalité du dispositif de freinage commandable (BK101) et du dispositif de freinage commandable (BK102) et du dispositif de freinage commandable (BK103) sont commandés pour être dans l'état de blocage des freins, les relations entre l'arbre de rotation (S101), l'arbre de rotation (S102) et l'arbre de rotation de type manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge ou pour travailler avec l'énergie cinétique rotative entée de l'extérieur pour entrainer communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique extérieure ou pour charger le dispositif de stockage d'énergie électrique externe.

7. Machine électrique comprenant un train d'engrenages planétaires commandable selon la revendication 1, dans laquelle la partie de rotation intérieure de la machine électrique (EM101) de la machine électrique (EM100) est combinée avec la roue solaire (W101) et combinée avec l'arbre de rotation (S101) pour jouer le rôle d'extrémité de sortie/entrée, l'arbre de rotation (S102) est connecté au porte-satellites (A101) relié par la roue planétaire (W103) pour jouer le rôle d'extrémité de sortie/entrée, et la roue annulaire extérieure (W102) est combinée avec la partie de rotation extérieure de la machine électrique (EM102) et combinée avec l'arbre de rotation de type manchon (AS101) pour jouer le rôle d'extrémité de sortie/entrée, de sorte qu'une partie ou la totalité des trois extrémités de sortie/entrée sont respectivement connectées à un côté action d'un dispositif de freinage commandable correspondant, et l'autre côté action du dispositif de freinage commandable est relié à un boîtier (H100) ; en commandant au dispositif de freinage commandable d'effectuer un blocage ou une libération des freins, les opérations de la fonction de transmission de connexion de transmission ou de libération entre l'arbre de rotation (S101) à l'extrémité de sortie/entrée, l'arbre de rotation (S102) à l'extrémité de sortie/entrée et l'arbre de rotation de type manchon (AS101) à l'extrémité de sortie/entrée du train d'engrenages planétaires (DG101) sont activées pour être commandées, et les opérations interactives entre la machine électrique (EM100) et les extrémités de sortie/entrée sont également activées pour être commandées.

8. Machine électrique comprenant un train d'engrenages planétaires commandable selon la revendication 7, dans laquelle un autre côté action du dispositif de freinage commandable (BK101) est fixé dans le boîtier (H100), le train d'engrenages planétaires (DG101) est également fixé dans le boîtier (H100), et le porte-satellites (A101) relié par la roue planétaire (W103) du train d'engrenages planétaires (DG101) est fourni pour entraîner l'arbre de rotation (S102) pour jouer le rôle d'extrémité de sortie/entrée, qui est principalement constituée de :
Les opérations englobent une ou plusieurs des fonctions suivantes :
-- Lorsque le dispositif de freinage commandable (BK101) est commandé pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) est commandé pour être dans l'état de libération, et que la machine électrique (EM100) est utilisée comme la fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et de la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est commandé pour être dans l'état de blocage des freins et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur pour effectuer des opérations interactives en fonction de l'amortissement de la charge externe ou de l'énergie cinétique rotative entrée de l'extérieur soutenus par l'arbre de rotation (S101) et l'arbre de rotation (S102) ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique externe ou pour charger le dispositif de stockage d'énergie électrique externe.

9. Machine électrique comprenant un train d'engrenages planétaires commandable selon la revendication 7, dans laquelle un autre côté action du dispositif de freinage commandable (BK101) est fixé dans le boîtier (H100), le train d'engrenages planétaires (DG101) est également fixé dans le boîtier (H100), le porte-satellites (A101) relié par la roue planétaire (W103) du train d'engrenages planétaires (DG101) est fourni pour entraîner l'arbre de rotation (S102) pour jouer le rôle d'extrémité de sortie/entrée, et l'arbre de rotation (S102) ou le porte-satellites (A101) est connecté à un côté action d'un dispositif de freinage commandable (BK102) tandis que l'autre côté action du dispositif de freinage commandable (BK102) est fixé dans le boîtier (H100) ;
Les opérations englobent une ou plusieurs des fonctions suivantes :
-- Lorsque le dispositif de freinage commandable (BK101) et le dispositif de freinage commandable (BK102) sont tous deux commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK102) sont tous deux commandés pour être dans l'état de libération, et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de machine électrique (EM101) et la partie de rotation extérieure de la machine électrique (EM102), en fonction de l'amortissement de la charge externe ou du couple de rotation, de la vitesse de rotation et la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage contrôlable (BK101) est commandé pour être dans l'état de blocage des freins, et que le dispositif de freinage commandable (BK102) est commandé pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, et que le dispositif de freinage commandable (BK102) est commandé pour être dans l'état de libération, et que la machine électrique (EM100) est utilisée comme la fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives correspondantes avec l'amortissement de la charge externe ou de l'énergie cinétique rotative entrée de l'extérieur soutenus par l'arbre de rotation (S101) et l'arbre de rotation (S102) ;
-- Lorsque le dispositif de freinage commandable (BK101) est commandé pour être dans l'état de libération et que le dispositif de freinage commandable (BK102) est commandé pour être dans l'état de blocage des freins, et que la machine électrique (EM100) n'est pas utilisée comme fonction de machine électrique, la relation de transmission entre l'arbre de rotation (S101) et l'arbre de rotation de type manchon (AS101) est dans une relation de connexion permettant une transmission ;
-- Lorsque le dispositif de freinage commandable (BK101) est commandé pour être dans l'état de libération et que le dispositif de freinage commandable (BK102) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation de type manchon (AS101) ;
-- Lorsque le dispositif de freinage commandable (BK101) et le dispositif de freinage commandable (BK102) sont tous deux commandés pour être dans l'état de blocage des freins, les relations entre l'arbre de rotation (S101), l'arbre de rotation (S102) et l'arbre de rotation de type manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour fonctionner en tant que fonction de moteur pour entraîner individuellement la charge, ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique externe ou pour charger le dispositif de stockage d'énergie électrique externe.

10. Machine électrique comprenant un train d'engrenages planétaires commandable selon la revendication 7, dans laquelle l'arbre de rotation (S101) est fourni pour se connecter à un côté action d'un dispositif de freinage commandable (BK103) tandis que l'autre côté action du dispositif de freinage commandable (BK103) est fixé dans le boîtier (H100), un autre côté action du dispositif de freinage commandable (BK101) est fixé dans le boîtier (H100), la coquille du train d'engrenages planétaires (DG101) est également fixée dans le boîtier (H100), et la roue planétaire (W103) du train d'engrenages planétaires (DG101) est fournie pour relier le porte-satellites (A101) et pour entraîner l'arbre de rotation (S102) pour jouer le rôle d'extrémité de sortie/entrée ;
Les opérations englobent une ou plusieurs des fonctions suivantes :
-- Lorsque le dispositif de freinage commandable (BK101) et le dispositif de freinage commandable (BK103) sont tous deux commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK103) sont tous deux commandés pour être à l'état de libération et que la machine électrique (EM100) est utilisée comme fonction de machine électrique, les opérations interactives correspondantes de la fonction de générateur d'énergie ou de fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et de la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est commandé pour être dans l'état de blocage des freins et que le dispositif de freinage commandable (BK103) est commandé pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins et que le dispositif de freinage commandable (BK103) est commandé pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation (S102) ;
-- Lorsque le dispositif de freinage commandable (BK101) est commandé pour être dans l'état de libération et que le dispositif de freinage commandable (BK103) est contrôlé pour être dans l'état de blocage des freins, et la machine électrique (EM100) n'est pas utilisée comme fonction de machine électrique, la relation de transmission entre l'arbre de rotation (S102) et l'arbre de rotation de type manchon (AS101) est dans une relation de connexion permettant une transmission ;
-- Lorsque le dispositif de freinage commandable (BK101) est contrôlé pour être dans l'état de libération et que le dispositif de freinage commandable (BK103) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur, pour effectuer des opérations interactives correspondantes avec l'amortissement de la charge externe ou de l'énergie cinétique rotative entrée de l'extérieur soutenus par l'arbre de rotation (S102) et l'arbre de rotation de type manchon (AS101) ;
-- Lorsque le dispositif de freinage commandable (BK101) et le dispositif de freinage commandable (BK102) sont tous deux commandés pour être dans l'état de blocage des freins, les relations entre l'arbre de rotation (S101), l'arbre de rotation (S102) et l'arbre de rotation de type de manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge ou pour travailler avec l'énergie cinétique rotative entrée de l'extérieur pour entrainer communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique externe ou pour charger le dispositif de stockage d'énergie électrique externe.

11. Machine électrique comprenant un train d'engrenages planétaires commandable selon la revendication 7, dans laquelle l'arbre de rotation (S101) est fourni pour se connecter à un côté action d'un dispositif de freinage commandable (BK103) tandis que l'autre côté action du dispositif de freinage commandable (BK103) est fixé dans le boîtier (H100), un autre côté action du dispositif de freinage commandable (BK101) est fixé dans le boîtier (H100), le train d'engrenages planétaires (DG101) est également fixé dans le boîtier (H100) et la roue planétaire (W103) du train d'engrenages planétaires (DG101) est fournie pour relier le porte-satellites (A101) et pour entraîner l'arbre de rotation (S102) pour jouer le rôle d'extrémité de sortie/entrée, et l'arbre de rotation (S102) ou le porte-satellites (A101) est relié à un côté action d'un dispositif de freinage commandable (BK102), et l'autre côté action du dispositif de freinage commandable (BK102) est fixé dans le boîtier (H100) ;
Les opérations englobent une ou plusieurs des fonctions suivantes :
-- Lorsque le dispositif de freinage commandable (BK101) et le dispositif de freinage commandable (BK102) et le dispositif de freinage commandable (BK103) sont tous commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK102) et le dispositif de freinage commandable (BK103) sont tous commandés pour être dans un état de libération et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et la direction de rotation de l'énergie cinétique rotative entrée de l'extérieur soutenus par l'arbre de rotation (S101) et l'arbre de rotation (S102) et l'arbre de rotation de type manchon (AS101) ;
-- Lorsque le dispositif de freinage commandable (BK101) est commandé pour être dans l'état de blocage des freins, que le dispositif de freinage commandable (BK102) et le dispositif de freinage commandable (BK103) sont commandés pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins et que le dispositif de freinage commandable (BK102) et le dispositif de freinage commandable (BK103) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou de fonction de moteur, pour effectuer des opérations interactives correspondantes avec l'amortissement de la charge externe ou l'énergie cinétique rotative entrée de l'extérieur soutenus par l'arbre de rotation (S101) et arbre de rotation (S102) ;
-- Lorsque le dispositif de freinage commandable (BK102) est commandé pour être dans l'état de blocage des freins, que le dispositif de freinage commandable (BK101) et le dispositif de freinage commandable (BK103) sont commandés pour être dans l'état de libération, et que la machine électrique (EM100) n'est pas utilisée comme fonction de machine électrique, la relation de transmission entre l'arbre de rotation (S101) et l'arbre de rotation de type manchon (AS101) est dans une relation de connexion permettant une transmission ;
-- Lorsque le dispositif de freinage commandable (BK102) est commandé pour être dans l'état de blocage des freins, que le dispositif de freinage commandable (BK101) et le dispositif de freinage commandable (BK103) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation (AS101) ;
-- Lorsque le dispositif de freinage commandable (BK103) est commandé pour être dans l'état de blocage des freins, que le dispositif de freinage commandable (BK101) et le dispositif de freinage commandable (BK102) sont commandés pour être dans l'état de libération, et que la machine électrique (EM100) n'est pas utilisée comme fonction de machine électrique, la relation de transmission entre l'arbre de rotation (S102) et l'arbre de rotation de type manchon (AS101) est dans une relation de connexion permettant pour une transmission ;
-- Lorsque le dispositif de freinage commandable (BK103) est commandé pour être dans l'état de blocage des freins, que le dispositif de freinage commandable (BK101) et le dispositif de freinage commandable (BK102) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur, pour effectuer des opérations interactives correspondantes avec l'amortissement de la charge externe ou de l'énergie cinétique rotative entrée de l'extérieur soutenus par l'arbre de rotation (S102) et l'arbre de rotation du type à manchon (AS101) ;
-- Lorsque les deux ou la totalité du dispositif de freinage commandable (BK101) et du dispositif de freinage commandable (BK102) et du dispositif de freinage commandable (BK103) sont commandés pour être dans l'état de blocage du frein, les relations entre l'arbre de rotation (S101), l'arbre de rotation (S102) et l'arbre de rotation de type manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge, ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie pour produire de l'énergie électrique pour entraîner la charge électrique externe ou pour charger le dispositif de stockage d'énergie électrique externe.

12. Machine électrique comprenant un train d'engrenages planétaires commandable selon la revendication 1, dans laquelle la partie de rotation intérieure de la machine électrique (EM101) de la machine électrique (EM100) est combinée avec la roue planétaire (W103) du train d'engrenages planétaires (DG101) et au porte-satellites (A101) pour se combiner conjointement sur un arbre de rotation (S102) pour jouer le rôle d'extrémité de sortie/entrée, et la roue solaire (W101) combinée sur l'arbre de rotation (S101) joue le rôle d'extrémité de sortie/entrée, et la roue annulaire extérieure (W102) du train d'engrenages planétaires (DG101) combinée avec une partie de rotation extérieure de la machine électrique (EM102) et un arbre de rotation de type manchon (AS101) est utilisé comme extrémité de sortie/entrée, de sorte qu'une partie ou la totalité des trois extrémités de sortie/entrée sont respectivement connectées à un côté action d'un dispositif de freinage commandable correspondant, et l'autre côté action du dispositif de freinage commandable est connecté à un boîtier (H100) ; en commandant au dispositif de freinage commandable d'effectuer un blocage ou une libération des freins, les opérations de la fonction de transmission de connexion de la transmission ou de libération entre l'arbre de rotation (S101) à l'extrémité de sortie/entrée, l'arbre de rotation (S102) à l'extrémité de sortie/entrée et l'arbre de rotation du type manchon (AS101) à l'extrémité de sortie/entrée du train d'engrenages planétaires (DG101) peuvent être commandées, et les opérations interactives entre la machine électrique (EM100) et les extrémités de sortie/entrée sont également activées pour être commandées.

13. Machine électrique comprenant un train d'engrenages planétaires commandables selon la revendication 12, un autre côté action du dispositif de freinage contrôlable (BK101) est fixé dans le boîtier (H100), et le train d'engrenages planétaires (DG101) est également fixé dans le boîtier (H100) ;
Les opérations englobent une ou plusieurs des fonctions suivantes :
-- Lorsque le dispositif de freinage commandable (BK101) est commandé pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) est commandé pour être dans l'état de libération et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction l'amortissement de la charge externe ou du couple de rotation, de la vitesse de rotation et la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est commandé pour être dans l'état de blocage des freins, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, et que la machine électrique (EM100) est utilisée comme la fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives en fonction de l'amortissement de la charge externe ou de l'énergie cinétique rotative entrée de l'extérieur soutenus par l'arbre de rotation (S101) et l'arbre de rotation (S102) ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge ou pour travailler avec l'énergie cinétique rotative entrée de l'extérieur pour entrainer communément la charge ;
Les opérations interactives de la fonction correspondante effectuées par la machine électrique mentionnée (EM100) comprennent la réception de l'entraînement de l'énergie cinétique rotative entrée de l'extérieur ou de l'entraînement de l'énergie cinétique d'inertie de charge pour être utilisée comme fonction de générateur d'énergie, de manière à produire de l'énergie électrique pour entraîner la charge électrique extérieure ou pour charger le dispositif de stockage d'énergie électrique externe.

14. Machine électrique comprenant un train d'engrenages planétaires commandable selon la revendication 12, dans laquelle un autre côté action du dispositif de freinage commandable (BK101) est fixé dans le boîtier (H100), le train d'engrenages planétaires (DG101) est également fixé dans le boîtier (H100), et l'arbre de rotation (S102) est connecté à un côté action d'un dispositif de freinage commandable (BK102) tandis que l'autre côté action du dispositif de freinage commandable (BK102) est fixé dans le boîtier (H100) ;
Les opérations englobent une ou plusieurs des fonctions suivantes :
-- Lorsque le dispositif de freinage commandable (BK101) et le dispositif de freinage commandable (BK102) sont tous deux commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK102) sont tous deux commandés pour être dans l'état de libération, et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et de la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est commandé pour être dans l'état de blocage des freins, et que le dispositif de freinage commandable (BK102) est commandé pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, et que le dispositif de freinage commandable (BK102) est commandé pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives correspondantes avec l'amortissement de la charge externe ou de l'énergie cinétique rotative entrée de l'extérieur soutenus par l'arbre de rotation (S101) et l'arbre de rotation (S102) ;
-- Lorsque le dispositif de freinage commandable (BK101) est commandé pour être dans l'état de libération et que le dispositif de freinage commandable (BK102) est commandé pour être dans l'état de blocage des freins, et que la machine électrique (EM100) n'est pas utilisée comme fonction de machine électrique, la relation de transmission entre l'arbre de rotation (S101) et l'arbre de rotation de type manchon (AS101) est dans une relation de connexion permettant une transmission ;
-- Lorsque le dispositif de freinage commandable (BK101) est commandé pour être dans l'état de libération et que le dispositif de freinage commandable (BK102) est commandé pour être dans l'état de blocage des freins, et que la machine électrique (EM100) est utilisée comme la fonction de machine électrique, entre la partie de rotation intérieure de la machine électrique (EM101) et la partie de rotation extérieure de la machine électrique (EM102) est utilisée comme fonction de générateur d'énergie ou comme fonction de moteur, pour effectuer des opérations interactives correspondantes avec l'amortissement de la charge externe ou de l'énergie cinétique rotative entrée de l'extérieur soutenus par l'arbre de rotation (S101) et l'arbre de rotation de type manchon (AS101) ;
-- Lorsque le dispositif de freinage commandable (BK101) et le dispositif de freinage commandable (BK102) sont tous deux commandés pour être dans l'état de blocage des freins, les relations entre l'arbre de rotation (S101), l'arbre de rotation (S102) et l'arbre de rotation de type de manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge ou pour travailler avec l'énergie cinétique rotative entrée de l'extérieur pour entrainer communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de charge pour être utilisée comme fonction de générateur d'énergie, de manière à produire de l'énergie électrique pour entraîner la charge électrique extérieure ou pour charger le dispositif de stockage d'énergie électrique externe.

15. Machine électrique comprenant un train d'engrenages planétaires commandable selon la revendication 12, dans laquelle l'arbre de rotation (S101) est connecté à un côté action d'un dispositif de freinage commandable (BK103) tandis que l'autre côté action du dispositif de freinage commandable (BK103) est fixé dans le boîtier (H100), un autre côté action du dispositif de freinage commandable (BK101) est fixé dans le boîtier (H100), le train d'engrenages planétaires (DG101) est également fixé dans le boîtier (H100), et la roue planétaire (W103) du train d'engrenages planétaires (DG101) est fournie pour la liaison du porte-satellites (A101) et de la partie de rotation intérieure de la machine électrique (EM101) et pour la connexion avec l'arbre de rotation (S102) devant jouer le rôle d'extrémité de sortie/entrée ;
Les opérations englobent une ou plusieurs des fonctions suivantes :
-- Lorsque le dispositif de freinage commandable (BK101) et le dispositif de freinage commandable (BK103) sont tous deux commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK103) sont tous deux commandés pour être dans l'état de libération et que la machine électrique (EM100) est utilisée comme fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et la direction de rotation de l'énergie cinétique rotative entrée de l'extérieur soutenus par l'arbre de rotation (S101), l'arbre de rotation (S102) et l'arbre de rotation de type manchon (AS101) ;
-- Lorsque le dispositif de freinage commandable (BK101) est contrôlé pour être dans l'état de blocage des freins, et que le dispositif de freinage commandable (BK103) est commandé pour être dans l'état de libération, et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, et que le dispositif de freinage commandable (BK103) est commandé pour être dans l'état de libération, et que la machine électrique (EM100) est utilisée comme la fonction de machine électrique, entre la partie de rotation intérieure de la machine électrique (EM101) et la partie de rotation extérieure de la machine électrique (EM102) est utilisée comme fonction de générateur d'énergie ou de fonction de moteur, pour effectuer des opérations interactives correspondantes avec l'amortissement de la charge externe ou l'énergie cinétique rotative entrée de l'extérieur soutenus par l'arbre de rotation (S101) et arbre de rotation (S102) ;
-- Lorsque le dispositif de freinage commandable (BK101) est commandé pour être dans l'état de libération, et que le dispositif de freinage commandable (BK103) est commandé pour être dans l'état de blocage des freins et que la machine électrique (EM100) n'est pas utilisée comme fonction de machine électrique, la relation de transmission entre l'arbre de rotation (S102) et l'arbre de rotation de type manchon (AS101) est dans une relation de connexion permettant une transmission ;
-- Lorsque le dispositif de freinage commandable (BK101) est commandé pour être dans l'état de libération, et que le dispositif de freinage commandable (BK103) est commandé pour être dans l'état de blocage des freins, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou comme fonction de moteur pour effectuer des opérations interactives correspondantes avec l'amortissement de la charge externe ou de l'énergie cinétique rotative entrée de l'extérieur soutenus par l'arbre de rotation (S102) et l'arbre de rotation de type manchon (AS101) ;
-- Lorsque le dispositif de freinage commandable (BK101) et le dispositif de freinage commandable (BK102) sont tous deux commandés pour être dans l'état de blocage des freins, les relations entre l'arbre de rotation (S101), l'arbre de rotation (S102) et l'arbre de rotation de type manchon (AS101) sont toutes dans l'état de blocage des freins ;
Les opérations interactives de la fonction correspondante effectuées par la machine électrique (EM100) mentionnée comprennent la réception de la commande d'entraînement de l'énergie électrique entrée de l'extérieur pour être utilisée comme fonction de moteur pour entraîner individuellement la charge, ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, de manière à produire de l'énergie électrique pour entraîner la charge électrique externe ou pour charger le dispositif de stockage d'énergie électrique externe.

16. Machine électrique comprenant un train d'engrenages planétaires commandable selon la revendication 12, dans laquelle l'arbre de rotation (S101) est connecté à un côté action d'un dispositif de freinage commandable (BK103) tandis que l'autre côté action du dispositif de freinage commandable (BK103) est fixé dans le boîtier (H100), un autre côté action du dispositif de freinage commandable (BK101) est fixé dans le boîtier (H100), le train d'engrenages planétaires (DG101) est également fixé dans le boîtier (H100), la roue planétaire (S103) du train d'engrenages planétaires (DG101) est fournie pour la liaison du porte-satellites (A101) et de la partie de rotation intérieure de la machine électrique (EM101) et la connexion à l'arbre de rotation (S102) pour jouer le rôle d'extrémité de sortie/entrée, et l'arbre de rotation (S102) est connecté à un côté action d'un dispositif de freinage commandable (BK102) tandis que l'autre côté action du dispositif de freinage contrôlable (BK102) est fixé dans le boîtier (H100), qui est principalement constituée de :
Les opérations englobent une ou plusieurs des fonctions suivantes :
-- Lorsque le dispositif de freinage commandable (BK101) et le dispositif de freinage commandable (BK102) et le dispositif de freinage commandable (BK103) sont tous commandés pour être dans l'état de libération, et que la machine électrique (EM100) n'est pas utilisée comme fonction de machine électrique, les relations de transmission entre l'arbre de rotation (S101) et l'arbre de rotation (S102) et l'arbre de rotation de type manchon (AS101) sont dans l'état de libération permettant une rotation à vide ;
-- Lorsque le dispositif de freinage commandable (BK101) et le dispositif de freinage commandable (BK102) et le dispositif de freinage commandable (BK103) sont tous commandés pour être dans l'état de libération, et que la machine électrique (EM100) est utilisée comme la fonction de machine électrique, les opérations interactives correspondantes de la fonction de générateur d'énergie ou de la fonction de moteur sont effectuées de manière correspondante entre la partie de rotation intérieure de la machine électrique (EM101) et la partie de rotation extérieure de la machine électrique (EM102), en fonction de l'amortissement de la charge externe ou du couple de rotation, de la vitesse de rotation et la direction de rotation de l'énergie cinétique rotative entrée de l'extérieur soutenus par l'arbre de rotation (S101), l'arbre de rotation (S102) et l'arbre de rotation du type manchon (AS101) ;
-- Lorsque le dispositif de freinage commandable (BK101) est commandé pour être dans l'état de blocage des freins, que le dispositif de freinage commandable (BK102) et le dispositif de freinage commandable (BK103) sont commandés pour être à l'état de libération et que la machine électrique (EM100) n'est pas utilisée comme fonction de machine électrique, la relation de transmission entre l'arbre de rotation (S101) et l'arbre de rotation (S102) est dans une relation de connexion permettant une transmission ;
-- Lorsque le dispositif de freinage commandable (BK101) est commandé pour être dans l'état de blocage des freins, que le dispositif de freinage commandable (BK102) et le dispositif de freinage commandable (BK103) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur pour effectuer des opérations interactives correspondantes avec l'amortissement de la charge externe ou de l'énergie cinétique rotative entrée de l'extérieur soutenus par l'arbre de rotation (S101) et l'arbre de rotation (S102) ;
-- Lorsque le dispositif de freinage commandable (BK102) est commandé pour être dans l'état de blocage des freins, que le dispositif de freinage commandable (BK101) et le dispositif de freinage commandable (BK103) sont commandés pour être dans l'état de libération, et que la machine électrique (EM100) n'est pas utilisée comme fonction de machine électrique, la relation de transmission entre l'arbre de rotation (S101) et l'arbre de rotation de type manchon (AS101) est une relation de connexion permettant une transmission ;
-- Lorsque le dispositif de freinage commandable (BK102) est commandé pour être dans l'état de blocage des freins, que le dispositif de freinage commandable (BK101) et le dispositif de freinage commandable (BK103) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou de fonction de moteur, pour effectuer des opérations interactives correspondantes avec l'amortissement de la charge externe ou l'énergie cinétique rotative entrée de l'extérieur soutenus par l'arbre de rotation (S101) et arbre de rotation (AS101) ;
-- Lorsque le dispositif de freinage commandable (BK103) est commandé pour être dans l'état de blocage des freins, que le dispositif de freinage commandable (BK101) et le dispositif de freinage commandable (BK102) sont commandés pour être dans l'état de libération, et que la machine électrique (EM100) n'est pas utilisée comme fonction de machine électrique, la relation de transmission entre l'arbre de rotation (S102) et l'arbre de rotation de type manchon (AS101) est dans une relation de connexion permettant une transmission ;
-- Lorsque le dispositif de freinage commandable (BK103) est commandé pour être dans l'état de blocage des freins, que le dispositif de freinage commandable (BK101) et le dispositif de freinage commandable (BK102) sont commandés pour être dans l'état de libération, et que la machine électrique (EM100) est utilisée comme fonction de machine électrique, entre la partie de rotation intérieure de la machine électrique (EM101) et la partie de rotation extérieure de la machine électrique (EM102) est utilisée comme fonction de générateur d'énergie ou fonction de moteur, pour effectuer des opérations interactives correspondantes avec l'amortissement de la charge externe ou de l'énergie cinétique rotative entrée de l'extérieur soutenus par l'arbre de rotation (S102) et l'arbre de rotation de type manchon (AS101) ;
-- Lorsque deux ou la totalité du dispositif de freinage commandable (BK101) et dispositif de freinage commandable (BK102) et du dispositif de freinage commandable (BK103) sont commandés pour être dans l'état de blocage des freins, les relations entre l'arbre de rotation (S101), l'arbre de rotation (S102) et l'arbre de rotation de type manchon (AS101) sont toutes dans l'état de blocage des freins ;
Les opérations interactives de la fonction correspondante effectuées par la machine électrique (EM100) mentionnée comprennent la réception de la commande de l'entraînement de l'énergie électrique entrée de l'extérieur pour être utilisée comme fonction de moteur pour entraîner individuellement la charge, ou pour travailler avec l'énergie cinétique rotative entrée de l'extérieur pour entraîner communément la charge ;
Les opérations interactives de la fonction correspondante effectuées par la machine électrique (EM100) mentionnée comprennent la réception de l'entraînement de l'énergie cinétique rotative entrée de l'extérieur ou de l'entraînement de l'énergie cinétique d'inertie de la charge pour être utilisée comme fonction de générateur d'énergie, pour produire de l'énergie électrique pour entraîner la charge électrique externe ou pour charger le dispositif de stockage d'énergie électrique externe.
